# EUROPÄISCHE PATENTANMELDUNG

(11) **EP 4 667 898 A1**
(43) Veröffentlichungstag der Anmeldung: **24.12.2025**
(21) Anmeldenummer: 24183733.5
(22) Anmeldetag: 21.06.2024
(51) Int. Cl.: G01N 1/06

(54) **VERFAHREN ZUR AUFBEREITUNG EINER HISTOLOGISCHEN PROBE UND HISTOLOGIE-PROBENAUFBEREITUNGSEINRICHTUNG**

(71) Anmelder: Hochschule für Angewandte Wissenschaft und Kunst Hildesheim/Holzminden/Göttingen, 31134 Hildesheim (DE); Georg-August-Universität Göttingen Stiftung Öffentlichen Rechts, Universitätsmedizin, 37075 Göttingen (DE)
(72) Erfinder: Dullin, Dr. Christian, 37136 Seeburg (DE); Nolte, Philipp, 37085 Göttingen (DE); Russmann, Prof. Dr. rer. nat. Christoph, 37075 Göttingen (DE); Gröger, Chris Johann, 37181 Hardegsen (DE); Frey, Prof. Dr. Christopher, 34132 Kassel (DE)
(74) Vertreter: REHBERG HÜPPE + PARTNER

(57) **Zusammenfassung**

Die Erfindung betrifft ein Verfahren zur Aufbereitung einer histologischen Probe und eine Histologie-Probenaufbereitungseinrichtung. Ein Probenhalter (1) weist drei ebene Referenzflächen aufweist, die ein Referenzkoordinatensystem vorgeben. Der Probenhalter (1) ist an einer Positionier- und/oder Schwenkeinrichtung, insbesondere einem Probenhalteraufnameteil (19) derselben, fixierbar, indem mittels einer Anpresseinrichtung (27) die Referenzflächen des Probenhalters (1) gegen Stützflächen (20, 21, 22) einer Probenhalteraufnahme (57) gepresst werden. Mittels der Positionier- und/oder Schwenkeinrichtung erfolgt eine Vorgabe der Position und Orientierung der Probe (33) gegenüber einer Trenneinrichtung derart, dass eine zuvor aus einem CT-Scan ermittelte Solltrennebene der Trennebene der Trenneinrichtung entspricht.

## Beschreibung

### TECHNISCHES GEBIET DER ERFINDUNG

In der Histologie erfolgt die Untersuchung von biologischen oder medizinischen Gewebeproben beispielsweise zu einer Frühdiagnose von Tumoren, einer Klassifizierung von Tumoren, einem Nachweis von Oberflächenmarkern und einem Nachweis von Stoffwechselerkrankungen und von parasitären, bakteriell entzündlichen Erkrankungen, in Verbindung mit der Radiologie und Pathologie, im Bereich der Materialwissenschaften, Werkstofftechnik und Dentologie oder für eine Detektion von morphologischen Veränderungen in der Knochenbildung. So nimmt bspw. der histologische Nachweis von Knochenmetastasen starken Einfluss auf die Therapieplanung und stellt einen signifikanten prognostischen Faktor für den Therapieverlauf bei metastasierenden Krebserkrankungen dar.

Die Histologie ist von zentraler Bedeutung für Diagnosestellung und Therapieentscheidung in einer Vielzahl von Erkrankungen. Für eine mikroskopische Analyse eines histologischen Präparates muss zunächst ein Probenstreifen erzeugt werden. Dabei kommt entscheidende Bedeutung dem Material- oder Probenzuschnitt zu. Eine visuelle und/oder taktile Ermittlung des geeigneten zu analysierenden Untersuchungsbereichs ("region of interest", ROI) kann insbesondere bei der Analyse von Hartgewebe erschwert oder unmöglich sein. Eine falsche Wahl und/oder Aufbereitung der Probe kann zur Einschränkung oder zu einem Ausschluss einer Verwertbarkeit der Probe führen. Erfolgt eine histologische Untersuchung im Bereich der Biologie oder der Medizin, stellen die Proben in der Regel Unikate dar, so dass eine falsche Materialentnahme und/oder Aufbereitung des entnommenen Materialvolumens irreversibel ist. Eine Entnahme zusätzlichen Materials infolge einer unpräzisen Verarbeitung ist mit zusätzlichen Kosten und zusätzlicher Belastung für einen Patienten verbunden. Hinzu kommt, dass die histologische Aufarbeitung einer Probe zeitaufwändig ist, so dass typischerweise nur ein sehr geringer Anteil des entnommenen Materialvolumens analysiert werden kann. Es ist daher von entscheidender Bedeutung, dass der analysierte Anteil die wesentlichen zu untersuchenden Strukturen (bspw. Tumorzellen) enthält.

Eine Aufbereitung einer medizinischen Probe erfordert bspw. eine Entnahme eines Materialvolumens aus dem Körper. Im weiteren wird das Gewebe fixiert (haltbar gemacht) und dann in eine erstarrende Chemikalie (bspw. Kunstharz) in eine Form zur Herstellung der Probe eingegossen. Im weiteren wird ein Schneiden der erstarrten Probe, ein Schleifen der erstarrten Probe und eine Einfärbung sowie eine anschließende Begutachtung der Probe unter einem Mikroskop mit einer anschließenden Digitalisierung durchgeführt. Die Entnahme des Materialvolumens aus dem Körper, die Ermittlung des Untersuchungsbereichs und die Wahl der Schnittführung beim Schneiden der Probe erfordern a-priori Wissen über die interne Anatomie des Körpers, des Materialvolumens und der Probe, welches nur in eingeschränktem Umfang vorhanden ist. Oft kann erst am Ende des beschriebenen Prozesses unter dem Mikroskop beurteilt werden, ob tatsächlich der richtige Untersuchungsbereich in dem dem Körper entnommenen Materialvolumen enthalten war und die Schnittführung den richtigen Untersuchungsbereich freigelegt hat. Bei der Untersuchung von für Licht undurchdringlichen Materialien (bspw. Knochengewebe) wird der beschriebene Prozess erschwert, da eine visuelle Inspektion des Inneren des extrahierten Materialvolumens vor dem Schneiden der erstarrten Form nicht möglich ist und auch durch eine Palpation des Körpers an der Stelle, wo das Materialvolumen entnommen werden soll, und/oder des extrahierten Materialvolumens in der Regel keine Gewinnung weiterer Erkenntnisse möglich ist.

### STAND DER TECHNIK

Die Veröffentlichung
J. C. Danz, M. Habegger, D. D. Bosshardt, C. Katsaros and A. Stavropoulos "Virtual tissue alignment and cutting plane definition - a new method to obtain optimal longitudinal histological sections", Journal of Anatomy, 224 (2014) 85, doi: 10.1111/joa.12140,
widmet sich der histologischen Untersuchung des Zahnfleisches von Ratten und schlägt ein Verfahren zur Aufbereitung der Probe vor, welches hinsichtlich der Analyseergebnisse, Reproduzierbarkeit, der Minimierung von zufälligen Fehlern verbessert sein soll und auf diese Weise die Zahl der Ratten, denen Proben zu entnehmen sind, reduzieren soll. Als bekannt wird beschrieben, dass ein Materialvolumen eines Knochens, eines Zahnes oder Zahnschmelz in ein Kunststoffmaterial eingebettet wird, welches eine grundsätzlich vergleichbare Härte aufweisen soll. Die derart aufbereitete Probe kann dann mittels Diamantsägen durchgesägt werden in zwei Probenteile, wobei anschließend eines der Probenteile im Bereich der Trennfläche geschliffen wird. Alternativ wird die Einbettung von Gewebe in Paraffin als bekannt beschrieben, wobei dieses Verfahren den Vorteil haben soll, dass eine größere Zahl von dünnen Probenkörpern erzeugt werden kann. Eine Ausrichtung der Probe vor dem Sägen zur Gewährleistung der richtigen Schnittebene kann dann auf Grundlage einer visuellen Begutachtung oder zusätzlicher Informationen radiografischer Untersuchungseinrichtungen vorgenommen werden, wobei in der Veröffentlichung kritisiert wird, dass dennoch in vielen Fällen die Schnittebene nicht exakt vorgegeben wird. Erwähnt wird auch der Einsatz von Mikro-Computer-Röntgenstrahlen-Tomographen (im Folgenden "MikroCT"). Mittels MikroCT kann ein MikroCT-Scan mit einem Stapel von parallelen MikroCT-Bildern erzeugt werden. Ein MikroCT-Scan beinhaltet dabei Darstellungen der relativen Elektronendichte des Untersuchungsobjektes in einem Stapel der MikroCT-Bilder. Die MikroCT-Bilder können eine Auflösung im Mikrometerbereich oder sogar Nanometerbereich aufweisen. MikroCT-Bilder und MikroCT-Scans können dabei in beliebige Raumrichtungen und orthogonal zueinander aufgenommen werden. Eine Erzeugung eines MikroCT-Models kann durch Nachbearbeitung des MikroCT-Scans derart erfolgen, dass nichtorthogonale virtuelle MikroCT-Bilder, gekrümmte MikroCT-Bilder oder auch dreidimensionale MikroCT-Bilder durch Einsatz eines Verfahrens zum Rendern erzeugt werden. Bei dem in der Veröffentlichung beschriebenen Verfahren wird das der Ratte entnommene Materialvolumen in eine standardisierte Form und Dimension gebracht, was als erforderlich angesehen wird, um anhand des CT-Scans festgelegte Schnittkoordinaten auf die Bandsäge übertragen zu können. Das Schneiden der Probe soll dann vertikal zur Aufbissebene in der Mesialebene erfolgen, womit (bei idealer Entnahme des Materialvolumens und Form und Dimension der Probe) eine für alle Ratten und Proben gleiche Referenzebene vorgegeben werden soll. Die Probe wird dann in einem Probenhalter angeordnet. Für sämtliche Proben sollen dann Schneidebenen genutzt werden sollen, die (bei idealer Entnahme des Materialvolumens und Form und Dimension der Probe) parallel zueinander orientiert sind. Für die Entnahme des Materialvolumens wird jeder Kiefer in ein rechtes und ein linkes Kieferteil aufgeteilt, indem das weiche Gewebe mit einem Skalpell durchtrennt wird. Die so erzeugten Halbkiefer werden dann fixiert in Formaldehyd, dehydriert und gereinigt sowie anschließend in zylindrischen Vials derart angeordnet, dass die Referenzebene parallel zum Boden des Vials angeordnet sind. In diesem Zustand wird dann die Probe in PMMA eingebettet. Die PMMA-Blöcke werden dann in eine zylindrische Form geschliffen mit einem Durchmesser von 10 mm und einer Höhe von 12 mm. Sechs derartige Proben werden dann gestapelt in einem Probenhalter angeordnet und es werden MikroCT-Scans der Proben mit einer Rotation des Probenhalters und inkrementeller Bewegung der Proben zur Herbeiführung isotroper Voxel-Dimensionen angefertigt. Durch manuelles Scrollen durch die einzelnen MikroCT-Bilder jeder Probe werden dann die Referenzebene und die Höhe der parallel zur Referenzebene orientierten Schnittebene vorgegeben. Als Problem wird hier adressiert, dass mittels der Histologie zu untersuchende Wurzeln eine Winkelabweichung gegenüber dem Sollwinkel zu der Referenzebene aufweisen können und nicht parallel zueinander orientiert sein können. Eine dieser Erkenntnis Rechnung tragende Veränderung der Schnittebene soll nicht erfolgen, da dies die histologische Aufarbeitung erschwert, zu einem Verlust von Gewebe führt und Störeinflüsse für das Ergebnis des histologischen Prozesses mit sich bringen kann. Vielmehr werden die Schnittebenen immer parallel zur Referenzebene derart gewählt, dass diese die Zellkammer in der Knochenhöhe und den wesentlichen Teil der Wurzelkanallänge erfassen, wobei hingenommen wird, dass infolge der Winkelfehler einige Wurzeln kürzer zu sein scheinen als ihre tatsächliche Länge. Die in der Veröffentlichung beschriebene Histologie-Probenaufbereitungseinrichtung weist eine freistehende Sägemaschine, hier ein Säge-Mikrotom, und eine Schleif- und Poliereinheit sowie einen vertikalen Probenhalter auf. Der vertikale Probenhalter mit der Probe wird dann in Richtung der Sägescheibe mittels eines elektronisch gesteuerten Arms entlang eines translatorischen Freiheitsgrads bewegt, um den Sägevorgang in der gewünschten Höhe über der Referenzebene durchzuführen. Eine Einstellung der Höhe des Probenhalters erfolgt durch manuelle Betätigung eines Spindeltriebs, wobei die Höhenänderung mittels einer digitalen Anzeige angezeigt wird. Durch selektive Anwahl der unterschiedlichen Wurzelhöhen werden selektiv Sägeschnitte erzeugt, in denen jeweils unterschiedliche Wurzeln freigelegt wurden. Die Schnittflächen werden dann poliert. Anhand eines Vergleichs von Konturen in dem dann erzeugten Histologieergebnis und entsprechender Konturen in den MikroCT-Bildern erfolgt eine Prüfung, ob die zuvor anhand des MikroCT-Scans bestimmte Schnittebene mit der tatsächlichen Schnittebene überstimmt, wobei eine Analyse unter Verwendung der Bland-Altman-Methode erfolgt. Weitere Analysen basieren auf einer weiteren Bilderkennung und Bildbearbeitung.
   G. M. Campbell, A. Sophocleous "Quantitative analysis of bone and soft tissue by micro-computed tomography: applications to ex vivo and in vivo studies", BoneKEy Reports 3 (2014), DOI: 10.1038/bonekey.2014.59,
offenbart den Einsatz einer Mikro-Computertomographie für eine Analyse von Knochenstrukturen, wobei mit einer isotropen Voxel-Größe von weniger als 10 µm eine Art dreidimensionaler MikroCT-Scan erzeugt werden soll. Die Anwendung der MikroCT kann in-vivo oder exvivo erfolgen. Die Veröffentlichung beschreibt die Probenentnahme, die Fixierung der Probe in Formalin für 24 Stunden oder die Fixierung in organischen Lösungen sowie die weitere Verarbeitung. Die eingesetzten Probenhalter sollen durchlässig für Röntgenstrahlung sein und auch ein Stapeln von Proben ermöglichen. Für die weitere Analyse werden die relevanten Untersuchungsbereiche des Knochens in dem MikroCT-Scan mittels einer geeigneten Software gesucht und identifiziert. Die Veröffentlichung beschreibt die weitere Analyse des MikroCT-Scans mit der Auswahl der relevanten Bereiche und Vorgabe der Analyseparameter, für in-vivo-Untersuchungen für eine Erfassung zeitlicher Veränderungen durch beabstandet erstellte MikroCT-Scans und eine automatische Verdrehung und Translation der MikroCT-Bilder zur Verbesserung der Vergleichbarkeit.

Auf der Website
https://www.walter-messner.de/cut-grinder/
(Datum der Einsichtnahme: 04.04.2024)
werden diamantbeschichtete Pathologiesägen des Unternehmens Walter Messner GmbH angeboten, die Anwendung finden für die Aufbereitung histologischer Präparate. Gemäß der Website können die Pathologiesägen für das Sägen von nativen und für in Kunststoff eingebettete Proben verwendet werden. Beim Sägen mit der Pathologiesäge kann Leitungswasser verwendet werden, um das Sägeband zu kühlen und eine Spülung zu gewährleisten.

Der Website
https://www.lls-rowiak.de/tissuesurgeon/
(Datum der Einsichtnahme: 05.04.2024)
ist eine Lasermikrotomie-Einrichtung des Unternehmens LS ROWIAK LaserLabSolutions GmbH zu entnehmen, mittels welcher ein kontaktfreies Schneiden mittels eines Lasers ermöglicht wird.

Die Veröffentlichung
J. Albers et al. "X-ray based virtual histology allows guided sectioning of heavy ion stained murine lungs for histological analysis", Scientific Reports 8 (2018) 7712,
(Datum der Einsichtnahme: 05.04.2024)
beschreibt den vorteilhaften Einsatz einer Femtolaser-Mikrotomie für die Extraktion eines Probenstreifens aus einer Probe, da das Schneiden mittels des Lasers keine den Probenstreifen beeinträchtigenden mechanischen Beanspruchungen hervorruft. In einem Workflow wird beschrieben, wie zunächst ein Materialvolumen (hier aus einer Lunge einer Maus) entnommen wird und dann in Paraffin oder Harz eingebettet wird und ein MikroCT-Scan der Probe erzeugt wird, in dem der Untersuchungsbereich ermittelt wird. Dann erfolgt ein Schneiden der Probe in dem Untersuchungsbereich unter Nutzung einer Standard-Mikrotomie oder eines schleifenden Sägens in Kombination mit einer Laser-Mikrotomie. Beschrieben wird hier auch, dass der dreidimensionale MikroCT-Scan und das zweidimensionale Ergebnis der histologischen Analyse miteinander verknüpft werden können. Deformationen des histologischen Bildes infolge der mechanischen Bearbeitung führen bei dieser Verknüpfung zu Problemen. Eine Verbesserung der Qualität der Verknüpfung kann durch Berücksichtigung eines Verformungsindexes herbeigeführt werden. Hierbei erfolgt eine Wahl der Schnittebene durch Ermittlung eines Höhenabstandes des identifizierten Untersuchungsbereichs von einer Oberfläche der Probe, die als Referenzfläche verwendet wird.

Die Veröffentlichung
K. Meechan et al. "Crosshair, semi-automated targeting for electron microscopy with a motorised ultramicrotome", eLife 2022, https://doi.org/10.7554/eLife.80899,
(Datum der Einsichtnahme: 05.04.2024)
beschreibt, dass üblicherweise eine Trennung einer Probe in einer zuvor mittels Röntgenstrahlen-Mikroskopie ermittelten Höhe, in welcher sich der Untersuchungsbereich befinden soll, erfolgt. Hierbei entspricht die Höhe der Trennung dem Abstand des in dem Röntgenbild identifizierten Untersuchungsbereichs von einer Oberfläche der Probe. Anschließend erfolgt dann eine Extraktion eines Materialbereichs mittels einer Ultra-Mikrotomie mittels einer Art Rasierklinge oder Diamantklinge. Als problematisch wird hier angesehen, dass keine exakte Vorgabe der Lage und Orientierung der Probe für die Ultra-Mikrotomie möglich ist, was ein aufwändiges iteratives Vorgehen mit sich bringen kann. Eine Beeinflussung der Orientierung der Schnittführung kann dabei manuell erfolgen. Vorgeschlagen wird in der Veröffentlichung auch, dass die Ultra-Mikrotomieeinrichtung mit fünf Motoren ausgestattet wird, mit welchen die Trennebene des Trennmessers in sämtliche Raumrichtungen verschwenkt werden kann und eine beliebige Bewegung des Trennmessers in der Trennebene möglich ist. Als Motoren finden hier Schrittmotoren Einsatz. Ermöglicht werden soll auf diese Weise eine automatische Berechnung der Bewegung des Schneidmessers, um eine Durchtrennung in einer spezifischen Trennebene, also unter beliebigen Winkeln und in einer beliebigen Höhe gegenüber einer Oberfläche der Probe, zu ermöglichen. In dem Verfahren wird zunächst die Probe zur Schaffung einer definierten Referenzfläche im Bereich seiner Außenfläche durchtrennt. Auf die so erzeugte rechteckige Referenzfläche sind dann die im Folgenden verwendeten Probenkoordinaten bezogen. Es wird dann ein Röntgenbild erzeugt, in welchem einerseits die Referenzfläche und andererseits der Untersuchungsbereich mit der Untersuchungsebene identifiziert werden. Die Abstände der Ecken der Referenzfläche werden herangezogen, um zu ermitteln, bei welcher Koordinate der Trennschnitt beginnen muss und wie lang der Trennschnitt sein muss. Dann wird ermittelt, welche Kante der Probe während der Ultra-Mikrotomie nach oben weisen soll. Bei der Durchführung der Ultra-Mikrotomie wird die Nulllage für die Drehwinkel und die Neigungswinkel der Klinge geprüft. Hieran anschließend wird die in Harz eingebettete Probe in die Ultra-Mikrotomieeinrichtung eingesetzt. Das Messer und die Referenzfläche des Probenblocks werden dann manuell zueinander ausgerichtet. Die derart ausgerichtete Position wird dann als Nulllage verwendet. Hieran anschließend werden die Motoren angesteuert für eine Erzeugung des Trennschnitts in der identifizierten Lage und Orientierung. Zur Erhöhung der Präzision wird auch eine Automatisierung vorgeschlagen, bei der zur Ermittlung der Relativlage zwischen dem Messer und der Referenzfläche die in den Probenhalter eingesetzte Probe mittels Röntgenstrahlen untersucht wird. Vorgeschlagen wird auch, dass jede Probe auf einem dünnen Aluminiumpin montiert wird, wobei dann das Durchtrennen durchgeführt werden mit einem so genannten Gatan 3-View Rivet Halter, der eine passgenaue Aufnahme des Pins ermöglicht. Um den manuellen Ausrichtschritt zu eliminieren, muss mittels der Aufnahme des Pins in dem Halter eine vorgegebene Orientierung vorgegeben werden. Der Pin kann auch eine Nut aufweisen, der eine passgenaue Aufnahme in einem korrespondierenden Vorsprung des Probenhalters findet. In diesem Fall können die relativen Koordinaten zwischen der Referenzfläche und dem Probenhalter direkt aus dem Röntgenbild ermittelt werden. Als ungelöstes Problem wird in der Veröffentlichung die Aufgabe beschrieben, einen absoluten Abstand zwischen dem Trennmesser und der Referenzfläche zu ermitteln.

Die Website
https://www.zdin.de/digitales-niedersachsen/projektubersicht/ct-laser-bone
(Datum der Einsichtnahme: 05.04.2024)
offenbart ein MikroCT-geführtes und Femtosekundenlaser-basiertes Schneiden von Knochenproben zur präzisen Detektion von pathologischen Veränderungen bei Ermöglichung eines präzisen, kontaktfreien Schneidens von hartem und weichem Gewebe ohne Artefakte und Kompressionen oder Risse. Die MikroCT-Daten der Resektate können mit den histologischen Bildern korreliert werden. Die Ergänzung der histologischen Auswertung durch 3D-Merkmale, wie beispielsweise Tumorvolumina oder eine Ausdehnung von Entzündungsherden, erlaubt eine Gewinnung zusätzlicher Informationen (vgl. auch
https://www.hawk.de/de/forschung/forschungsprojekte/mct-gefuehrtes-undfemtosekundenlaser-basiertes-schneiden-von-knochenproben)
(Datum der Einsichtnahme: 05.04.2024)).

Die Website
https://www.forschung-fachhochschulen.de/fachhochschulen/shareddocs/ projekte/en/fhprofunt/ct-laser-bone.html
(Datum der Einsichtnahme: 05.04.2024)
beschreibt bei einem derartigen Verfahren die Erstellung eines MikroCT-Scans, auf dessen Grundlage dann eine optimale Sollschnittebene virtuell festgelegt wird. Eine Diamantsäge wird dann anhand der virtuellen Sollschnittebene automatisch angesteuert. Das geschnittene Probeneil wird dann auf einen Träger geklebt. Mittels einer Laser-Mikrotomie wird ein dünner Probenstreifen für eine histologische Untersuchung gewonnen. Es erfolgt eine Korrelation der MikroCT-Daten mit dem Ergebnis der histologischen Untersuchung, hier einer Licht-Mikroskopie.

### AUFGABE DER ERFINDUNG

Der Erfindung liegt die Aufgabe zugrunde,
- ein Verfahren zur Aufbereitung einer histologischen Probe sowie
- eine Histologie-Probenaufbereitungseinrichtung
hinsichtlich einer Auswahl einer Solltrennebene der Probe und der Herbeiführung der ausgewählten Solltrennebene entsprechenden Trennebene der Probe zu verbessern.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Eine Lösung der der Erfindung zugrunde liegenden Aufgabe stellt ein Verfahren zur Aufbereitung einer histologischen Probe dar. In diesem Verfahren erfolgt zunächst eine Fixierung, insbesondere Befestigung oder mechanische Fixierung, der Probe an einem Probenhalter, bei dem es sich bspw. um eine Probenkassette oder ein Probenaufnahmeteil handeln kann. Der Probenhalter ist dabei so ausgestaltet, dass dieser drei ebene Referenzflächen aufweist. Die Referenzflächen verfügen über Referenzflächennormale. Die Referenzflächennormale bilden Referenzkoordinatenachsen, die ein räumliches Referenzkoordinatensystem ausbilden. Alternativ oder kumulativ kann ein Referenzkoordinatensystem verwendet werden, dessen Referenzkoordinatenachsen den Schnittachsen der Referenzflächen entsprechen. Hierbei können die Winkel zwischen den Referenzkoordinatenachsen beliebig sein, sodass das Referenzkoordinatensystem ein affines Referenzkoordinatensystem sein kann. Vorzugsweise sind die Referenzkoordinatenachsen aber jeweils unter einem Winkel von 90° zueinander orientiert, womit die Referenzkoordinatenachsen ein orthogonales Referenzkoordinatensystem aufspannen.

In dem Verfahren wird ein räumlicher CT-Scan einerseits eines Abschnitts des Probenhalters und andererseits eines relevanten Abschnitts der an dem Probenhalter fixierten Probe erzeugt. Vorzugsweise handelt es sich bei dem räumlichen CT-Scan um einen MikroCT-Scan.

In dem erfindungsgemäßen Verfahren erfolgt eine Identifizierung der drei Referenzebenen des Probenhalters mit der daran gehaltenen Probe in dem CT-Scan. Hierbei erfolgt vorzugsweise eine Ermittlung der Lage und/oder Orientierung der Referenzebenen, womit die Lage und Orientierung des durch die Referenzflächennormale vorgegebenen räumlichen Referenzkoordinatensystems ermittelt ist.

In dem erfindungsgemäßen Verfahren erfolgt des Weiteren eine Identifizierung eines Untersuchungsbereichs in dem CT-Scan, der für die spätere histologische Untersuchung verwendet werden soll. Hierzu können die bekannten, auch in dem eingangs angeführten Stand der Technik beschriebenen und/oder teil- oder vollautomatisierten Identifizierungsverfahren genutzt werden. Beispielsweise kann eine Identifizierung eines Untersuchungsbereichs auf Grundlage einer Bilderkennung erfolgen, in welcher charakteristische Eigenschaften der Probe, beispielsweise eine Knochenstruktur oder Gewebestruktur und u. U. krankhafte Veränderungen derselben oder eine näher zu untersuchende Anomalie erkannt werden.

In dem erfindungsgemäßen Verfahren erfolgt dann eine Identifizierung einer Solltrennebene der Probe, wobei die Solltrennebene entlang des zuvor identifizierten Untersuchungsbereichs in dem CT-Scan verläuft. Um diese Solltrennebene zu beschreiben, erfolgt eine Identifizierung mindestens einer Solltrennkoordinate und/oder mindestens einer Solltrennorientierung der Solltrennebene. Hierbei ist die Solltrennkoordinate und/oder Solltrennorientierung auf das durch die Referenzflächen vorgegebene räumliche Referenzkoordinatensystem bezogen. Die Solltrennkoordinaten und Solltrennorientierungen sind somit in einem körperfesten, nämlich probenhalterfesten Koordinatensystem beschrieben. Wird der Probenhalter mit der Probe bewegt (wie im Folgenden noch beschrieben wird), ändern sich die Solltrennkoordinaten und die Solltrennorientierungen in diesem bewegten Referenzkoordinatensystem nicht.

In dem erfindungsgemäßen Verfahren erfolgt eine Fixierung des Probenhalters mit daran fixierter Probe an einer Positionier- und/oder Schwenkeinrichtung. Mittels einer Betätigung der Positionier- und/oder Schwenkeinrichtung kann eine Bewegung des Probenhalters und damit der Probe derart herbeigeführt werden, dass die Probe in die erforderliche Relativlage und relative Orientierung gegenüber einer Trenneinrichtung, insbesondere einer Bandsäge gebracht wird, um möglichst eine Durchtrennung der Probe in einer Trennebene herbeizuführen, die der zuvor ermittelten Solltrennebene entspricht. Erfindungsgemäß liegen bei der Fixierung des Probenhalters an der Positionier- und/oder Schwenkeinrichtung die drei Referenzflächen des Probenhalters an zugeordneten Stützflächen einer Probenhalteraufnahme der Positionier- und/oder Schwenkeinrichtung an. Die Wechselwirkung zwischen den Referenzflächen und den Stützflächen gewährleistet, dass der Probenhalter (und damit die Probe) eine vorbestimmte Relativlage und relative Orientierung gegenüber der Positionier- und/oder Schwenkeinrichtung einnehmen. Sind die absoluten Koordinaten und Orientierungen der Stützflächen der Positionier- und/oder Schwenkeinrichtung in Abhängigkeit von den Stellbewegungen der Positionier- und/oder Schwenkeinrichtung entlang der Freiheitsgrade derselben gegenüber einem nicht bewegten Gestell oder Referenzpunkt zuvor (durch Messung oder Berücksichtigung der Kinematik) ermittelt worden, ist eine Umwandlung der Solltrennkoordinaten und Solltrennorientierungen in dem Referenzkoordinatensystem in Abhängigkeit von den Stellbewegungen der Positionier- und/oder Schwenkeinrichtung in ein absolutes Koordinatensystem der Histologie-Probenaufbereitungseinrichtung möglich. Andererseits ist auf dieser Grundlage auch eine Ansteuerung der Positionier- und/oder Schwenkeinrichtung derart möglich, dass die Probe durch Stellbewegungen der Positionier- und/oder Schwenkeinrichtung in die erforderliche Relativstellung gegenüber einer Trenneinrichtung gebracht wird, damit die Trenneinrichtung die Proben im Bereich einer Trennebene durchtrennt, die der Solltrennebene entspricht.

In dem erfindungsgemäßen Verfahren erfolgt eine Betätigung der Positionier- und/oder Schwenkeinrichtung derart, dass die Trennebene der Trenneinrichtung, die die Ebene des tatsächlich herbeigeführten Schnittes beschreibt, (innerhalb der akzeptablen Toleranzen) der Solltrennebene entspricht. Es erfolgt hierbei die Betätigung in Abhängigkeit der identifizierten Solltrennkoordinate und/oder Solltrennorientierung. Durch Bewegung der Trenneinrichtung oder durch Betätigung der Positionier- und/oder Schwenkeinrichtung zur Bewegung des Probenhalters erfolgt eine Veränderung der relativen Lage und/oder Orientierung der Trenneinrichtung gegenüber dem Probenhalter mit der Probe entlang der Trenn- und Solltrennebene, womit ein Durchtrennen der Probe in Probenteile erfolgt. Mindestens die Schnittfläche eines Probenteils kann dann für die weitere Aufbereitung verwendet werden. Beispielsweise kann dann mit einer Mikrotomie ein Heraustrennen einer Probenschicht erfolgen, der dann histologisch untersucht wird.

Im Rahmen der Erfindung kann eine Fixierung der Probe an einem Probenhalter grundsätzlich in beliebiger Weise (vgl. bspw. den Stand der Technik) erfolgen, solange die Fixierung auch bei den wirkenden Trennkräften eine Veränderung der Lage und/oder Orientierung der Probe gegenüber dem Probenhalter ausschließt.

Auch für die Fixierung des Probenhalters an der Positionier- und/oder Schwenkeinrichtung gibt es im Rahmen der Erfindung vielfältige Möglichkeiten. Für ein erfindungsgemäßes Verfahren weist die Positionier- und/oder Schwenkeinrichtung oder weist der Probenhalter eine Anpresseinrichtung auf. Mittels der Anpresseinrichtung werden die Referenzflächen des Probenhalters und die Stützflächen der Probenhalteraufnahme der Positionier- und/oder Schwenkeinrichtung mit einer Anpresskraft aneinander gepresst, die gewährleistet, dass eine vorzugsweise flächige Anlage zwischen sämtlichen Stützflächen und Referenzflächen gewährleistet ist. In dem erfindungsgemäßen Verfahren weist die Anpresskraft Anpresskraftkomponenten auf, die jeweils vertikal zu einer Referenzfläche und/oder einer Stützfläche der Probenhalteraufnahme der Positionier- und/oder Schwenkeinrichtung orientiert sind. Die Anpresskraftkomponenten gewährleisten somit die zuverlässige Anlage zwischen den Referenzflächen und den Stützflächen, womit auch gewährleistet ist, dass sich die Probe in der richtigen Lage und Orientierung gegenüber der Positionier- und/oder Schwenkeinrichtung befindet.

Für die Weiterverarbeitung der durchtrennten Probenteile gibt es im Rahmen der Erfindung vielfältige Möglichkeiten. Für ein erfindungsgemäßes Verfahren wird nach dem Durchtrennen der Probe ein Probenteil auf einen Objektträger aufgebracht und daran befestigt, beispielsweise durch Verkleben. Auf dem Objektträger kann dann mittels einer Mikrotomie, insbesondere einer Laser-Mikrotomie, aus dem Probenteil ein Materialstreifen, bei dem es sich um eine Materialschicht handeln kann, herausgetrennt werden. Kommt hierfür eine Laser-Mikrotomie zum Einsatz, können mechanische Kräfte für das Heraustrennen vermieden werden, die zu unerwünschten Beeinträchtigungen des der histologischen Untersuchung unterzogenen Materialstreifens führen würden.

Möglich ist, dass dann ein Probenteil oder der herausgetrennte Materialstreifen histologisch untersucht wird. Vorzugsweise wird dabei ein zweidimensionales Histologieergebnis erzeugt, bei dem es sich um ein zweidimensionales Bild handeln kann. In dem erfindungsgemäßen Verfahren kann dann eine Verknüpfung des zweidimensionalen Histologieergebnisses mit dem dreidimensionalen CT-Scan erfolgen. Diese Verknüpfung kann für beliebige Zwecke erfolgen, von denen im Folgenden lediglich einige beispielhaft genannt werden:
a) Möglich ist, dass die Verknüpfung des Histologieergebnisses mit dem CT-Scan beinhaltet, dass dem Histologieergebnis eine Histologieergebnis-Koordinate und/oder eine Histologieergebnis-Orientierung in dem CT-Scan zugeordnet wird. Damit kann das Histologieergebnis auch mit Ergebnissen, die aus dem CT-Scan abgeleitet werden, korreliert oder ergänzt werden. Umgekehrt kann eine Interpretation von Bestandteilen des CT-Scans anhand des Histologieergebnisses erfolgen.
b) Alternativ oder kumulativ möglich ist, dass die Verknüpfung des Histologieergebnisses mit dem CT-Scan beinhaltet, dass eine Verifikation erfolgt, ob die tatsächliche Trennebene der Probe der Solltrennebene entspricht, die zuvor auf Grundlage des CT-Scans ermittelt worden ist.
c) Alternativ oder kumulativ möglich ist, dass die Verknüpfung des Histologieergebnisses mit dem CT-Scan beinhaltet, dass eine grafische Ausgabe erzeugt wird, bei der das Histologieergebnis in den CT-Scan eingebettet ist. Es kann somit eine Anzeige erzeugt werden, in der sowohl Bestandteile des CT-Scans als auch das Histologieergebnis eingeblendet sind und die dann für die weitere Diagnostik und Auswertung genutzt werden kann.
d) Alternativ oder kumulativ möglich ist, dass die Verknüpfung des Histologieergebnisses mit dem CT-Scan beinhaltet, dass die grafische Ausgabe, bei der das Histologieergebnis in den CT-Scan eingebettet ist, oder der CT-Scan selber auf Grundlage des Histologieergebnisses modifiziert wird. Wird beispielsweise anhand des Analyseergebnisses ermittelt, dass ein Bildbereich in dem Histologieergebnis eine besondere Gewebeform oder Erkrankung hat, kann eine entsprechende farbliche Kennzeichnung in der grafischen Ausgabe oder dem CT-Scan erfolgen. Ermöglicht das Analyseergebnis auch einen Rückschluss auf eine räumliche Erstreckung einer Anomalie oder einer Erkrankung, kann eine entsprechende Modifikation der grafischen Ausgabe oder des CT-Scans erfolgen, indem die grafische Erstreckung hierin berücksichtigt wird.

Möglich ist, dass aus einem Probenteil, welches mit dem erfindungsgemäßen Verfahren abtrennt worden ist, lediglich ein einziger Materialstreifen gewonnen wird. Insbesondere für den Fall, dass eine Laser-Mikrotomie zur Heraustrennung eines ersten Materialstreifens verwendet wird, wird lediglich eine geringe Schicht des Probenteils beseitigt. In diesem Fall kann (ggf. nach einem Schleifen der Schnittfläche, aus welcher der erste Materialstreifen entnommen worden ist) eine nochmalige Durchtrennung des Probenteils und/oder ein nochmaliges Heraustrennen eines dann zweiten Materialstreifens erfolgen usw., womit auch eine schichtweise Analyse des Probenteils mit jeweils den einzelnen Schichten zugeordneten Materialstreifen möglich ist. Hierbei kann ein Abtrennen einer Schicht mittels der Trenneinrichtung unter geeigneter Ansteuerung der Positionier- und/oder Schwenkeinrichtung erfolgen und/oder es kann eine weitere Mikrotomie, insbesondere Laser-Mikrotomie, zum Einsatz kommen. Möglich ist, dass auch Materialstreifen aus unterschiedlich orientierten Trennebenen oder an unterschiedlichen Positionen entnommen werden.

Im Rahmen der Erfindung kann eine Identifizierung mindestens einer Solltrennkoordinate und/oder mindestens einer Solltrennorientierung auf beliebige, grundsätzlich bekannte Weise erfolgen (vgl. auch den eingangs angeführten Stand der Technik). Für einen besonderen Vorschlag der Erfindung findet zur Identifizierung der Referenzflächen ein Hough-Linien-Algorithmus und/oder ein Raytracing-Algorithmus Einsatz. Diese Algorithmen haben sich als robust hinsichtlich der Identifizierung herausgestellt, gewährleisten die erforderliche Genauigkeit und/oder führen zu einer schnellen und zuverlässigen Identifizierung.

Mittels eines Hough-Linien-Algorithmus können Linien in einem komplexen Bild erkannt werden, was im vorliegenden Verfahren insbesondere für die Erkennung der Linien der Referenzflächen in dem CT-Scan genutzt werden kann. Der Hough-Linien-Algorithmus kann im Rahmen der Erfindung dahingehend verbessert werden, dass in einem herkömmlichen Hough-Linien-Algorithmus zusätzlich die a-priori-Erkenntnisse berücksichtigt werden, dass die Referenzebenen eine vorbekannte Länge aufweisen sowie einen Winkel von 90° aufweisen, womit eine bessere und/oder schnellere Erkennung ermöglicht ist.

Der Raytracing-Algorithmus detektiert vorzugsweise die Unterseite des Probenhalters und die von der Unterseite des Probenhalters gebildete Referenzfläche. Dies erfolgt anhand einer sprungartigen Veränderung eines Farbwerts, insbesondere einer Graustufe, in dem CT-Scan. Es erfolgt dann vorzugsweise eine Auswertung an mehreren Punkten entlang der Unterseite und die Festlegung einer über mehrere detektierte Punkte gemittelten Ausgleichsebene, womit eine Erhöhung der Genauigkeit herbeigeführt werden kann.

Eine weitere Lösung der der Erfindung zugrunde liegenden Aufgabe stellt eine Histologie-Probenaufbereitungseinrichtung dar. Die Histologie-Probenaufbereitungseinrichtung verfügt über einen Probenhalter. Der Probenhalter weist drei ebene Referenzflächen auf. Die Referenzflächen verfügen über Referenzflächennormale, die ein räumliches Referenzkoordinatensystem aufspannen. Des Weiteren verfügt die Histologie-Probenaufbereitungseinrichtung über eine Positionier- und/oder Schwenkeinrichtung, eine Trenneinrichtung und einen CT-Scanner, wobei hinsichtlich dieser Komponenten der Histologie-Probenaufbereitungseinrichtung das zuvor Gesagte entsprechend gelten kann.

Die erfindungsgemäße Histologie-Probenaufbereitungseinrichtung verfügt über eine Steuereinrichtung, die mit Steuerlogik ausgestattet ist, die geeignet gestaltet und konfiguriert ist, um den Probenhalter, die Positionier- und/oder Schwenkeinrichtung, die Trenneinrichtung und/oder den CT-Scanner so anzusteuern, dass mit der Histologie-Probenaufbereitungseinrichtung ein Verfahren ausgeführt werden kann, wie dieses zuvor erläutert worden ist.

Vorzugsweise weist der Probenhalter der Histologie-Probenaufbereitungseinrichtung eine Befestigungs- und/oder Klemmeinrichtung auf, mittels welcher eine Probe in einer Probenaufnahme des Probenhalters fixiert werden kann.

Möglich ist im Rahmen der Erfindung auch, dass die Probenhalteraufnahme der Positionier- und/oder Schwenkeinrichtung Stützflächen aufweist, welche entsprechend den Referenzflächen des Probenhalters orientiert sind.

In weiterer Ausgestaltung der erfindungsgemäßen Histologie-Probenaufbereitungseinrichtung weist die Positionier- und/oder Schwenkeinrichtung oder der Probenhalter eine Anpresseinrichtung auf. Die Anpresseinrichtung presst die Referenzflächen des Probenhalters mit einer Anpresskraft an die Stützflächen der Probenhalteraufnahme der Positionier- und Schwenkeinrichtung an. Hierbei weist die Anpresskraft Anpresskraftkomponenten auf, die jeweils vertikal zu einer Referenzfläche und/oder einer Stützfläche der Probenhalteraufnahme der Positionier- und/oder Schwenkeinrichtung orientiert sind.

Für eine Ausgestaltung der Anpresseinrichtung weist diese eine Spannschraube, oder Anpressstange oder Zugstange auf. Die Spannschraube, Anpressstange oder Zugstange kann sich dann durch eine Ausnehmung oder eine Nut des Probenhalters hindurch erstrecken, womit sich eine besonders kompakte Ausgestaltung ergeben kann. Andererseits kann eine Längsachse der Spannschraube, Anpressstange oder Zugstange die Richtung der Anpresskraft vorgeben. Hierbei muss die Anpresskraft derart ausgerichtet sein, dass sich die zuvor genannten Anpresskraftkomponenten ergeben, was besonders einfach herbeiführbar ist, wenn sich die Spannschraube, Anpressstange oder Zugstange durch die Ausnehmung oder Nut des Probenhalters hindurch erstreckt. Vorzugsweise erstreckt sich die Längsachse der Spannschraube, Anpressstange oder Zugstange und damit die Richtung der Anpresskraft durch den Ursprung des Referenzkoordinatensystems des Probenhalters oder den Schnittpunkt der durch die Referenzflächen vorgegebenen Referenzebenen oder die unmittelbare Nachbarschaft desselben.

Als Trenneinrichtung zum Durchtrennen der Probe in zwei Probenteile kann eine beliebige Trenneinrichtung Einsatz finden. Möglich ist bspw., dass es sich bei der Trenneinrichtung um eine Bandsäge mit einem Sägeband handelt, wobei das Sägeband eine beliebige Gestaltung der Sägezähne oder Trennschneiden aufweisen kann. Hierbei kann ein Sägeband geometrisch bestimmte Schneiden, also geometrisch definiert beschreibbare Zähne gleicher oder unterschiedlicher Geometrien, oder geometrisch unbestimmte Schneiden mit stochastisch verteilten Partikeln aufweisen, wobei auch möglich ist, dass Zähne des Sägebandes mit Partikeln belegt sind und/oder hochharte Schneideinsätze mit geometrisch bestimmter Schneide aufweisen. Vorzugsweise finden Schneidpartikel oder -einsätze Einsatz, die hochhart sind. Möglich ist beispielsweise, dass Schneidpartikel oder -einsätze aus Korund (Al₂O₃) oder Siliciumcarbid (SiC), Schneidpartikel aus monokristallinem Diamant (MKD), aus polykristallinem Diamant (CVD-D), polykristallinem Diamant (PKD), kubischem Bornitrid (CBN), aus Schneidkeramik, Hartmetall oder Kombinationen bestehen oder diese Materialien aufweisen.

Für die Gestaltung der Trenneinrichtung gibt es vielfältige Möglichkeiten. Möglich ist, dass bei Ausgestaltung der Trenneinrichtung als Bandsäge mindestens eine Führungseinrichtung vorhanden ist. Diese Führungseinrichtung kann dann in Bewegungsrichtung des Sägebands vor und/oder hinter dem Sägebereich für das Durchtrennen der Probe angeordnet sein und damit das Sägeband vor und hinter dem sägenden Kontakt mit der Probe führen. Vorzugsweise erfolgt mittels der Führungseinrichtung dann eine Führung quer zur Trennebene.

Möglich ist, dass in der Trenneinrichtung eine Spül- und/oder Schmiereinrichtung vorhanden ist, welche ein Spül- und/oder Schmierfluid auf das Sägeband und/oder die Probe im Bereich eines Sägekanals der Probe aufbringt. Das Spül- und/oder Schmierfluid dient bspw. zur Verbesserung der Kontaktbedingungen zwischen dem Sägeband und der Probe und/oder oder einer Kühlung und/oder einem Spülen des Sägekanals mit der Abfuhr von von der Probe abgetrennten Partikeln oder Spänen.

Für die technische Ausgestaltung der Positionier- und/oder Schwenkeinrichtung gibt es vielfältige Möglichkeiten, wobei diese die erforderlichen Freiheitsgrade gewährleisten muss, um die Bewegung und Verschwenkung der Probe derart zu ermöglichen, dass die mit der Trenneinrichtung herbeigeführte Trennebene der Solltrennebene (innerhalb einer gewissen akzeptablen Toleranz) entspricht.

Für einen besonderen Vorschlag der Erfindung verfügt die Histologie-Probenaufbereitungseinrichtung über eine Positionier- und/oder Schwenkeinrichtung, die einen translatorischen Trenn-Freiheitsgrad aufweist, über welchen die Relativbewegung zwischen der Positionier- und/oder Schwenkeinrichtung mit der daran gehaltenen Probe und der Trenneinrichtung, insbesondere dem Sägeband, herbeigeführt wird, um die Durchtrennung entlang der Trennebene herbeizuführen. Zusätzlich ist dann ein translatorischer Positionier-Freiheitsgrad vorhanden, der horizontal und vertikal zu dem Trenn-Freiheitsgrad orientiert ist. Die Positionier- und/oder Schwenkeinrichtung verfügt dann des Weiteren über einen ersten Dreh-Freiheitsgrad um eine Drehachse, die der Längsachse der Probenhalteraufname der Positionier- und/oder Schwenkeinrichtung entspricht. Ein weiterer, zweiter Dreh-Freiheitsgrad ist dann vertikal zu der durch den Trenn-Freiheitsgrad und den Positionier-Freiheitsgrad aufgespannten Ebene orientiert. Während grundsätzlich möglich ist, dass noch weitere Freiheitsgrade vorhanden sind, verfügt für einen besonderen Vorschlag der Erfindung die Positionier- und/oder Schwenkeinrichtung ausschließlich über die vorgenannten Freiheitsgrade.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis** 5: zeigen einen Probenhalter (Fig. 1: Ansicht von links; Fig. 2: Ansicht von rechts; Fig. 3: Ansicht von oben; Fig. 4: Ansicht von unten; Fig. 5: Schnitt V-V in Fig. 1).
- **Fig. 6 bis** 8: zeigen ein Probenhalteraufnahmeteil (Fig. 6: räumliche Ansicht; Fig. 7: Draufsicht; Fig. 8: Schnitt VIII-VIII in Fig. 7).
- **Fig. 9 bis 12**: zeigen die Verbindung des Probenhalters gemäß Fig. 1 bis 5 mit dem Probenhalteraufnahmeteil gemäß Fig. 6 bis 8 (Fig. 9: räumliche Ansicht in der nicht montierten Betriebsstellung; Fig. 10: räumliche Ansicht in der montierten Betriebsstellung ; Fig. 11: Draufsicht in der nicht montierten Betriebsstellung; Fig. 12; Schnitt XII-XII in Fig. 11).
- **Fig. 13 bis 16**: zeigen eine Histologie-Probenaufbereitungseinrichtung, in der der Probenhalter gemäß Fig. 1 bis 5 und das Probenhalteraufnahmeteil gemäß Fig. 6 bis 8 eingesetzt ist, sowie Teile der Histologie-Probenaufbereitungseinrichtung (Fig. 13: räumliche Ansicht; Fig. 14: Detail XIV gemäß Fig. 13 im Bereich der Führungseinrichtung für ein Sägeband; Fig. 15: räumliche Explosionsdarstellung einer Positionier- und/oder Schwenkeinrichtung; Fig. 16: räumliche montierte Darstellung der Positionier- und/oder Schwenkeinrichtung mit Schienen und Seilzug).

### FIGURENBESCHREIBUNG

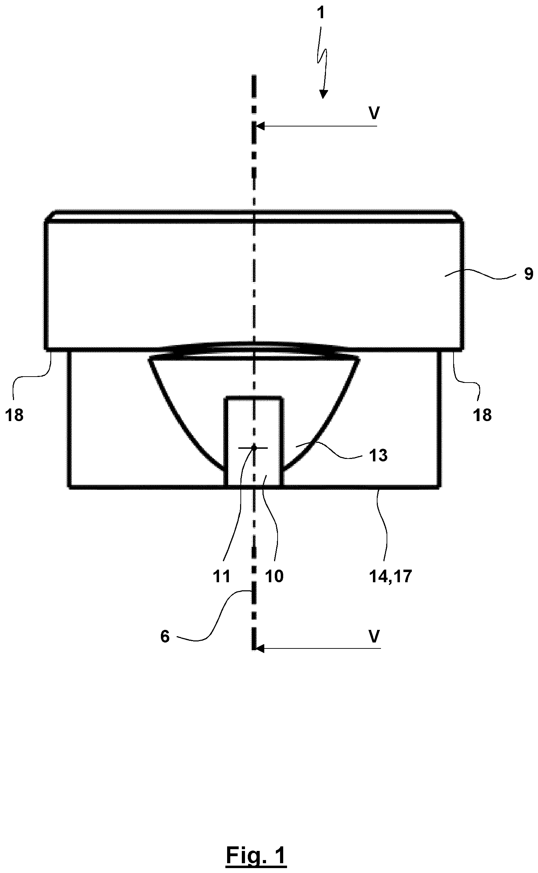

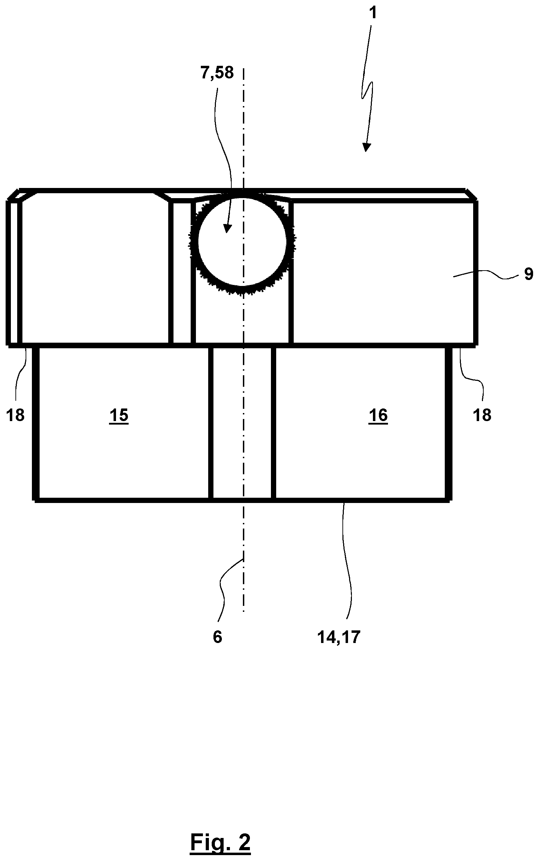

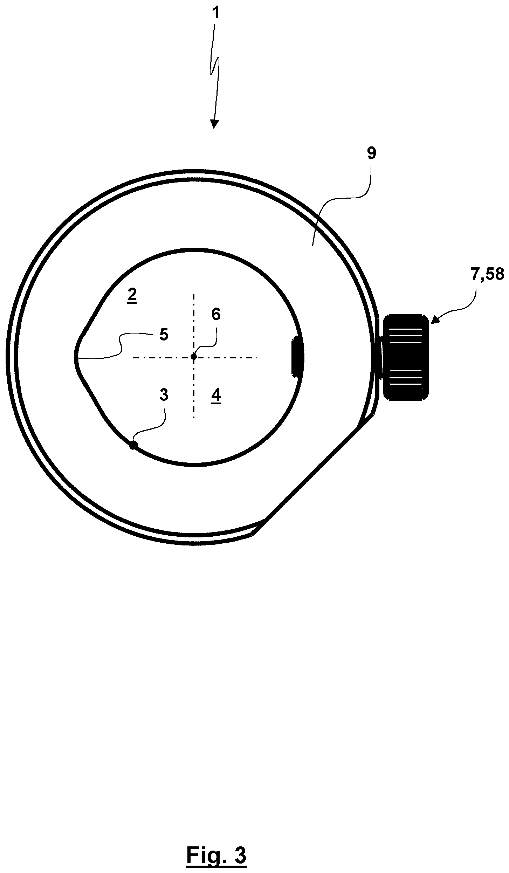

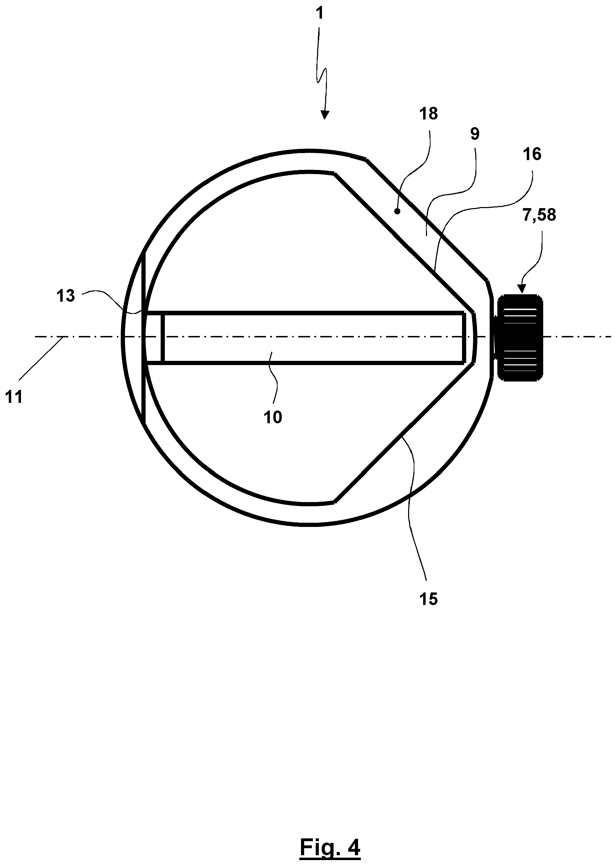

**Fig. 1 bis 5** zeigen einen Probenhalter 1. Der Probenhalter 1 weist eine Probenaufnahme 2 auf. Für das in Fig. 1 bis 5 dargestellte Ausführungsbeispiel ist die Probenaufnahme 2 als Sackbohrung oder Konturtasche mit einer zylindrischen Innenfläche 3 und einem Boden 4 ausgebildet. In die Probenaufnahme 2 kann ein zylindrischer Endabschnitt einer Probe 33 eingesetzt werden, wobei dann die Mantelfläche des Endabschnitts an der Innenfläche 3 anliegt und entlang einer Probenaufnahmeachse 6 des Probenhalters 1 oder parallel zu dieser ausgerichtet ist, während die Stirnseite des Endabschnitts an dem Boden 4 anliegt und abgestützt ist. Möglich ist, dass die Innenfläche 3 radial nach innen orientierte Fortsätze oder Rippen oder (wie in Fig. 3 zu erkennen ist) Erweiterungen oder Ausbeulungen 5, insbesondere in Form definierter Spanflächen aufweist. Die Fortsätze, Rippen, Erweiterungen oder Ausbeulungen 5 können zur Herbeiführung eines Formschlusses in Umfangsrichtung zwischen der Probenaufnahme 2 und dem Endabschnitt der Probe 33 genutzt werden. Möglich ist alternativ oder kumulativ möglich ist, dass eine als Spanfläche ausgebildete Ausbeulung 5 und die Spannschraube 7 zueinander einen Winkel von 120° aufweisen, womit eine gleichmäßige Abstützung des zylindrischen Endbereichs der Probe gewährleistet werden kann.

Eine Fixierung der in der Probenaufnahme 2 angeordneten Probe 33 kann auf beliebige Weise erfolgen. So kann beispielsweise die Probe 33 in die Probenaufnahme 2 eingeklebt sein. Für das in den Fig. 1 bis 5 dargestellte Ausführungsbeispiel erfolgt die Sicherung, insbesondere ein Fixieren, Befestigen oder Klemmen der Probe 33 in der Probenaufnahme 2 durch eine Sicherungsschraube 7, die als Spann- oder Klemmschraube ausgebildet sein kann. Die Sicherungsschraube 7 ist in eine Durchgangsgewindebohrung 8 eines Grundkörpers 9 des Probenhalters 1 eingeschraubt und kann mit dem Einschrauben mit ihrer radial nach innen weisenden Stirnseite gegen die Mantelfläche des in der Probenaufnahme 2 angeordneten Endabschnitts der Probe gepresst werden. Vorzugsweise befindet sich die Sicherungsschraube 7 auf der (in Umfangsrichtung um die Probenaufnahmeachse 6 gesehen) gegenüberliegenden Seite von der Erweiterung oder Ausbeulung 5.

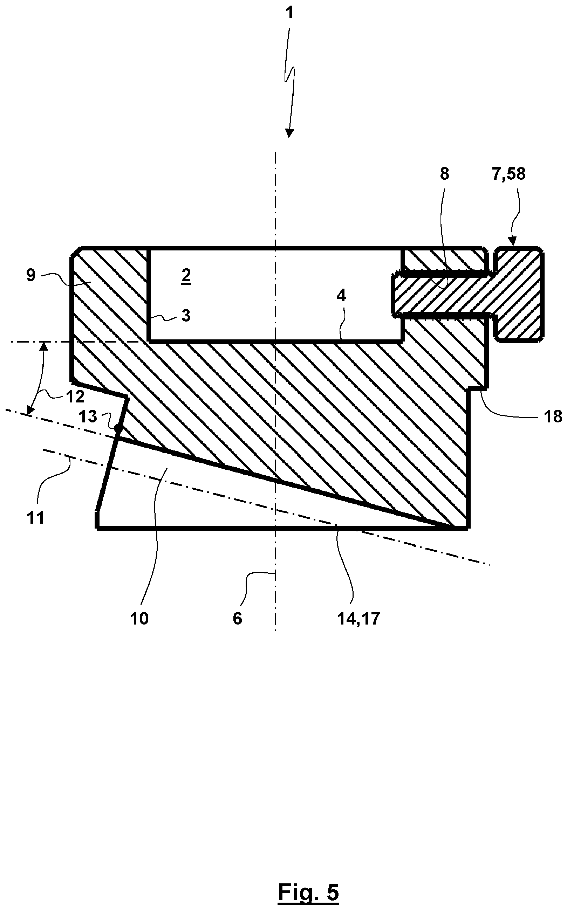

Auf der der Probenaufnahme 2 abgewandten Seite verfügt der Grundkörper 9 des Probenhalters 1 über eine Nut 10, deren Längsachse 11 und/oder Nutgrund gegenüber dem Boden 4 mit einem Winkel 12 geneigt ist. Der Winkel 12 kann beispielsweise im Bereich von 5° bis 30° oder 10° bis 20° liegen. Die Längsachse der Nut 11 erstreckt sich radial zu der Probenaufnahmeachse 6. Die Nut 11 hat infolge des Winkels 12 eine sich in radialer Richtung zu der Probenaufnahmeachse 6 verändernde Nuttiefe. Für das dargestellte Ausführungsbeispiel ist die Nuttiefe auf einer Seite des Probenhalters maximal, während die Nut auf der anderen Seite des Probenhalters 1 im Randbereich desselben ausläuft (vgl. Fig. 5).

In dem Endbereich der Nut 10 mit der maximalen Nuttiefe bildet der Grundkörper 9 des Probenhalters 1 eine vertikal zu der Längsachse 11 der Nut 10 orientierte Anpressfläche 13. Die Anpressfläche 13 ist auch gegenüber der sonstigen Mantelfläche des Probenhalters 1 geneigt, wobei der Neigungswinkel vorzugsweise dem Winkel 12 entspricht.

Auf der der Probenaufnahme 2 abgewandten Seite bildet der Grundkörper 9 des Probenhalters 1 drei Referenzflächen 14, 15, 16 aus. Für das in Fig. 1 bis 5 dargestellte Ausführungsbeispiel verfügen die Referenzflächen 14, 15, 16 über Flächennormale, die ein orthogonales Referenzkoordinatensystem bilden.

Die Referenzfläche 14 ist von der Unterseite 17, also der der Probenaufnahme 2 abgewandten Seite des Grundkörpers 9 ausgebildet. Die Referenzfläche 14 verfügt über eine Flächennormale, welche parallel zu der Probenaufnahmeachse 6 orientiert ist. Die Referenzfläche 14 ist parallel zu dem Boden 4 der Probenaufnahme 2 orientiert. Für das dargestellte Ausführungsbeispiel ist die Referenzfläche 14 durch die Nut 10 in zwei koplanare Referenzflächenteile unterteilt.

Die Referenzflächen 15, 16 sind von Seitenflächen des Grundkörpers 9 des Probenhalters 1 ausgebildet, die einen Winkel von 90° bilden. Die beiden Referenzflächen 15, 16 erstrecken sich parallel zu der Probenaufnahmeachse 6 sowie vertikal zueinander.

Der obere Teil des Grundkörpers 9 des Probenhalters 1, im Bereich dessen die Probenaufnahme 2 und die Sicherungsschraube 7 angeordnet sind, geht über eine Stufe 18 über in den unteren Teil, im Bereich dessen die Referenzflächen 14, 15, 16 ausgebildet sind und sich die Nut 10 sowie die Anpressfläche 13 befinden. Möglich ist abweichend zu dem dargestellten Ausführungsbeispiel, dass die Referenzfläche 14 nicht von der Unterseite 17 des Probenhalters 1 ausgebildet wird, sondern von der Stufe 18.

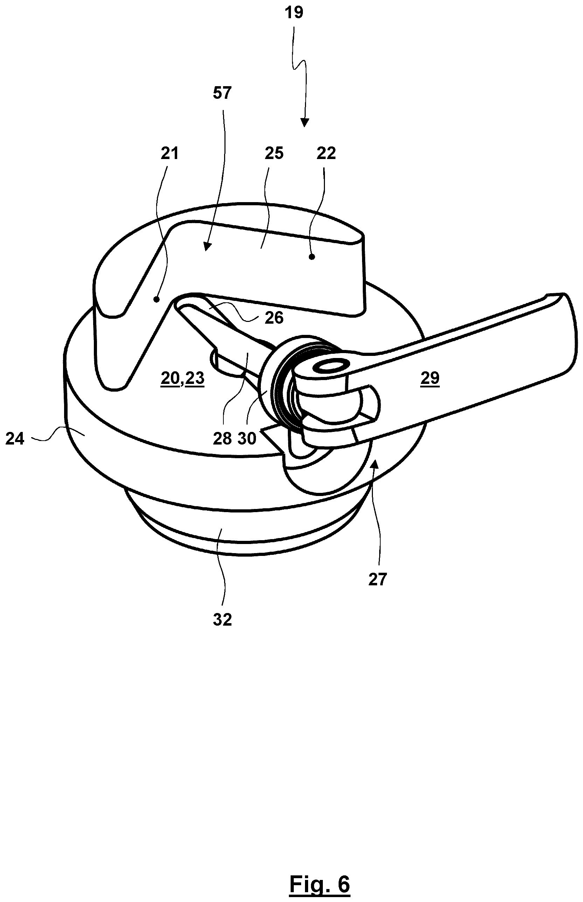

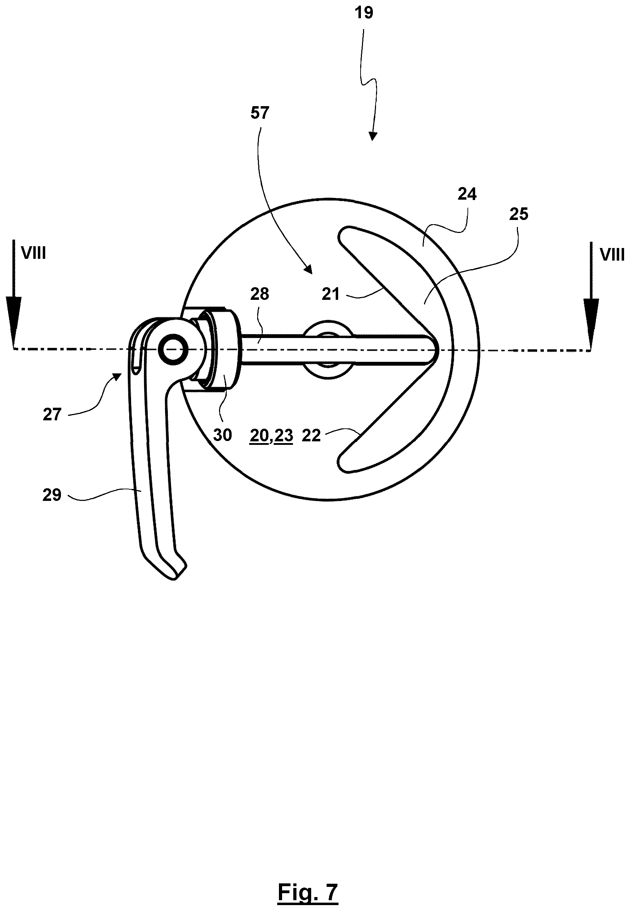

**Fig. 6 bis 8** zeigen ein Probenhalteraufnahmeteil 19. Das Probenhalteraufnahmeteil 19 ist bestimmt für eine Aufnahme des Probenhalters 1 und für das Halten desselben in einer vorgegebenen relativen Position und Orientierung.

Das Probenhalteraufnahmeteil 19 verfügt über Stützflächen 20, 21, 22. Die Stützflächen 20, 21, 22 verfügen über Flächennormale, die orthogonal zueinander orientiert sind. Die Stützflächen 20, 21, 22 sind somit bei geeigneter relativer Anordnung des Probenhalters 1 gegenüber dem Probenhalteraufnahmeteil 19 entsprechend den Referenzflächen 14, 15, 16 angeordnet und orientiert.

Eine obere Stirnfläche 23 des Probenhalteraufnahmeteils 19 bildet die Stützfläche 20, die bestimmt ist für die Anlage der Referenzfläche 14.

Oberhalb der Stirnfläche 23 verfügt ein Grundkörper 24 des Probenhalteraufnahmeteils 19 über einen randseitigen Fortsatz. Der Fortsatz verfügt über eine teilzylindrische Mantelfläche sowie eine in der Draufsicht L-förmige Innenfläche, wobei die beiden Schenkel des L jeweils eine Stützfläche 21, 22 bildet, die für die Anlage der Referenzflächen 15, 16 bestimmt sind.

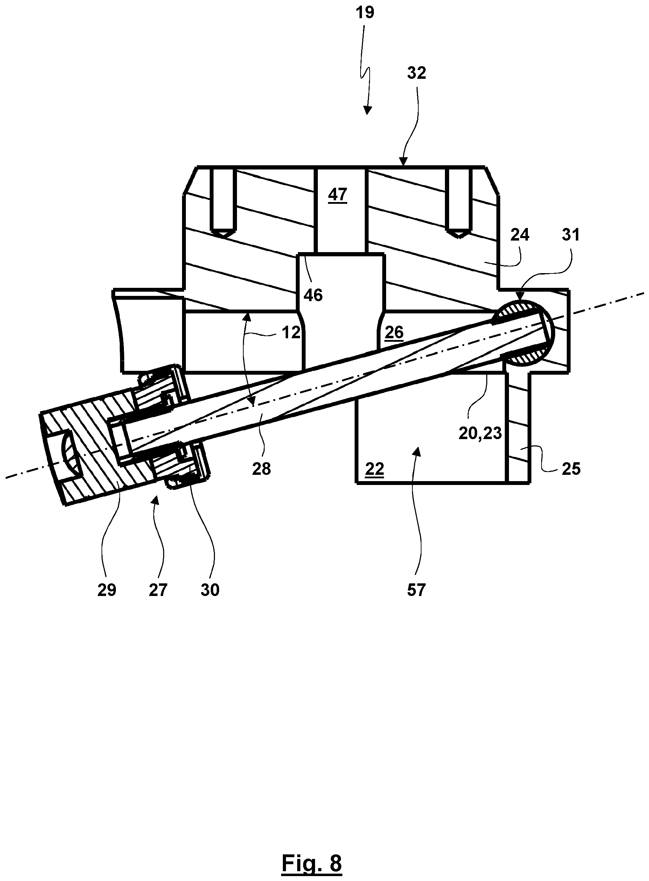

Die Stirnfläche 23 und damit die Stützfläche 20 verfügt über eine Nut 26, deren Längsachse parallel zu der Stützfläche 20 orientiert ist. Durch die Nut 26 erstreckt sich eine Anpresseinrichtung 27, nämlich eine Spannschraube, Anpressstange 28 oder Zugstange der Anpresseinrichtung 27. Die Anpressstange 28 verfügt dabei über eine Längsachse, die in der mit dem Probenhalter 1 montierten Betriebsstellung gegenüber der Nut 26 und der Stützfläche 20 um den Winkel 12 geneigt ist. In einem Endbereich ist die Anpressstange 28 über ein Gelenk 31 in dem Endbereich der Nut 26 des Grundkörpers 24 verschwenkbar gelagert, womit eine Änderung des Betrags des Winkels 12 ermöglicht ist. In dem anderen, infolge der Neigung mit dem Winkel 12 nach unten aus dem Probenhalteraufnahmeteil 19 und der Nut 26 herausstehenden Endbereich ist an der Anpressstange 28 ein Exzenterhebel 29 verschwenkbar gelagert. Mit der Verschwenkung des Exzenterhebels 29 kann eine Anpressplatte 30 der Anpresseinrichtung 27 in Richtung der Längsachse der Anpressstange 28 zur Verringerung des Abstands von dem Gelenk 31 bewegt und zur Erzeugung einer Anpresskraft beaufschlagt werden. Möglich ist, dass die mit der Anpressstange 28, dem Exzenterhebel 29, der Anpressplatte 30 und dem Gelenk 31 gebildete Anpresseinrichtung 27 eine von einem Gewinde gebildete Einstelleinrichtung aufweist, mittels welcher der Abstand der Anpressplatte 30 von dem Gelenk 31 einstellbar ist. Wie in Fig. 8 anhand der unterschiedlichen Schraffuren erkennbar ist, kann die Anpressplatte 30 aus zwei Teilen bestehen. Die eigentliche Anpressplatte ist dann eine Überwurfmutter, die auf das Pressstück des Exzenterhebels 29 geschraubt ist. Außerdem ist der Exzenterhebel 29 auf den Zugstab 28 geschraubt und dieser ist in das Gelenk 31 geschraubt. In diesem Fall können somit drei Gewinde vorhanden sein, über die ein Einstellen des Abstandes zwischen der Anpressplatte und dem Gelenk möglich ist. Genutzt wird für die Einstellung dann vorzugsweise nur das Gewinde im Exzenterhebel und die Überwurfmutter, wobei die Überwurfmutter für eine Feineinstellung dient, wobei sichergestellt wird, dass sich der Exzenterhebel 29 beim Schneiden nicht im weg ist.

Die Anpresseinrichtung 27 kann grundsätzlich entsprechend einem Laufradspanner für eine Verbindung eines Laufrads eines Rennrads mit einer Gabel ausgebildet sein.

Auf der den Stützflächen 20, 21, 22 abgewandten Seite bildet das Grundkörpers 24 des Probenhalteraufnahmeteils 19 einen Kopplungsabschnitt 32 aus.

Für eine abweichende Ausführungsform, bei welcher in dem Probenhalter 1 die Referenzfläche 14 von der Stufe 18 ausgebildet wird, kann bei dem Probenhalteraufnahmeteil 19 die Stützfläche 20 von der Oberseite des Fortsatzes 25 ausgebildet sein.

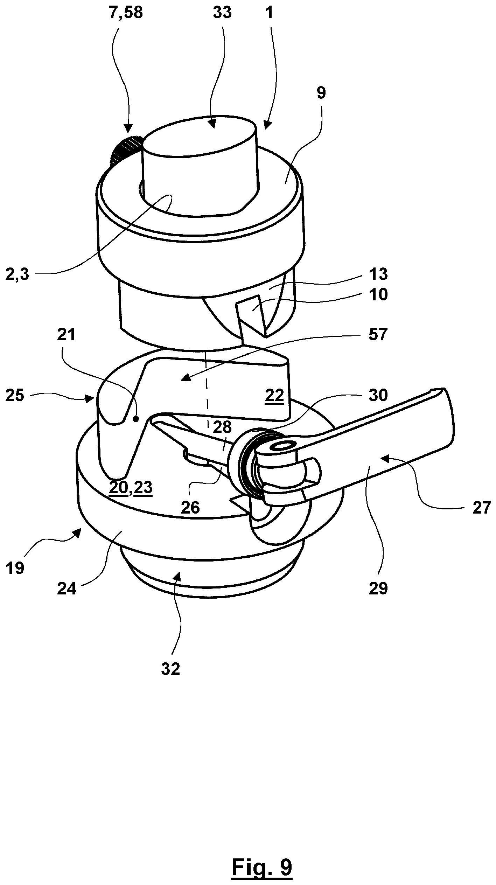

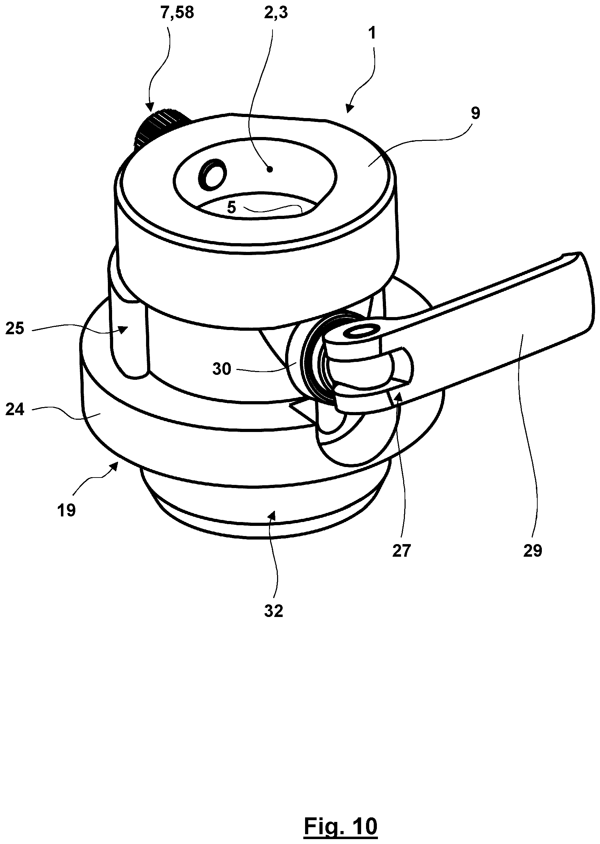

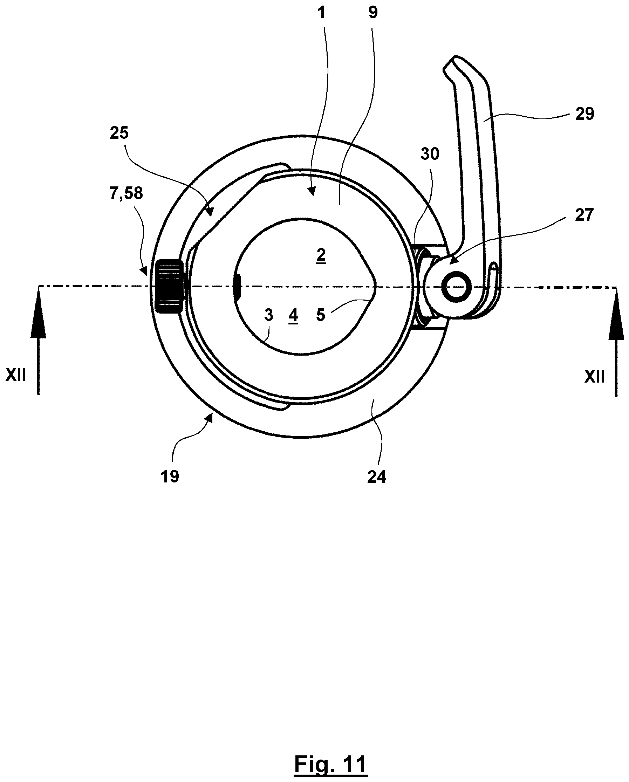

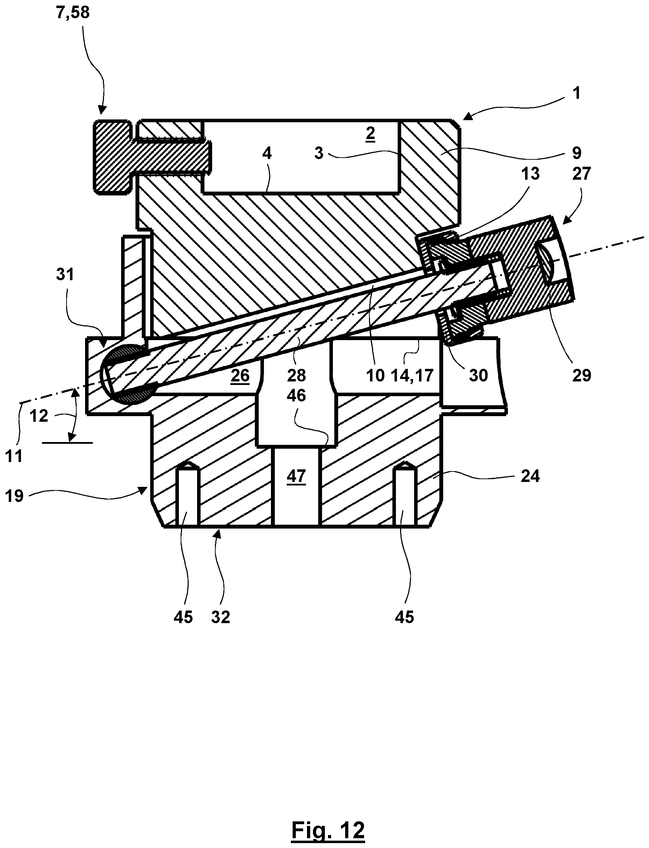

**Fig. 9 bis 12** zeigen das Einsetzen des Probenhalters 1 in das Probenhalteraufnahmeteil 19. Hierzu wird gemäß Fig. 9 der Probenhalter 1 von oben an das Probenhalteraufnahmeteil 19 angenähert, wobei die Referenzflächen 15, 16 während der Annäherung möglichst koplanar zu den Stützflächen 21, 22 angeordnet sind. Mit der Annäherung tritt der aus der Stirnfläche 23 herausragende Abschnitt der Anpressstange 28 ein in die Nut 10 des Probenhalters 1.

In der am Ende herbeigeführten Fügestellung liegen die Referenzflächen 14, 15 ,16 des Probenhalters 1 an an den Stützflächen 20, 21, 22 des Probenhalteraufnahmeteils 19, womit eine definierte relative Lage und relative Orientierung des Probenhalters 1 und des Probenhalteraufnahmeteils 19 gewährleistet ist. In dieser gefügten Stellung ist die Anpressplatte 30 der Anpresseinrichtung 27 im Bereich der Anpressfläche 13 des Probenhalters 1 angeordnet.

Ein Spannen des Exzenterhebels 29 führt zur Bewegung der Anpressplatte 30 nach innen, womit eine in Richtung der Längsachse der Anpressstange 28 orientierte Anpresskraft erzeugt werden kann. Die derart herbeigeführte Anpresskraft verfügt über Anpresskraftkomponenten, mit welchen jeweils die Referenzflächen 14, 15, 16 an die Stützflächen 20, 21, 22 gepresst werden. Eine Aufteilung der Anpresskraft auf die Anpresskraftkomponenten erfolgt entsprechend der Wahl der Orientierung der Längsachse der Anpressstange 28 und insbesondere entsprechend der Wahl des Winkels 12.

In Fig. 9 ist auch die in der Probenaufnahme 2 des Probenhalters 1 gehaltene Probe 33 dargestellt, während die Probe in den anderen Figuren zur Vereinfachung der Darstellungen nicht dargestellt ist.

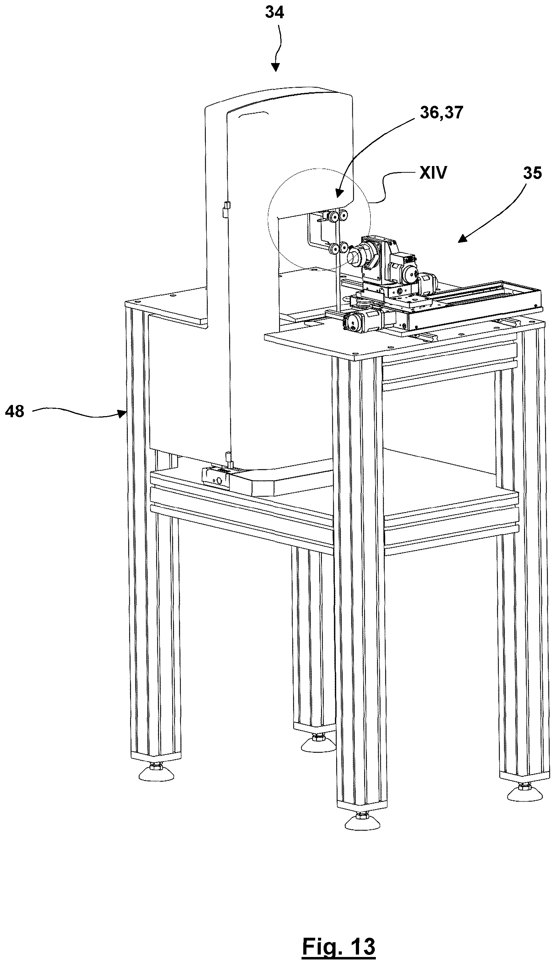

**Fig. 13 bis 16** zeigen eine Histologie-Probenaufbereitungseinrichtung 34. Die Histologie-Probenaufbereitungseinrichtung 34 weist eine Positionier- und/oder Schwenkeinrichtung 35 und eine Trenneinrichtung 36 auf.

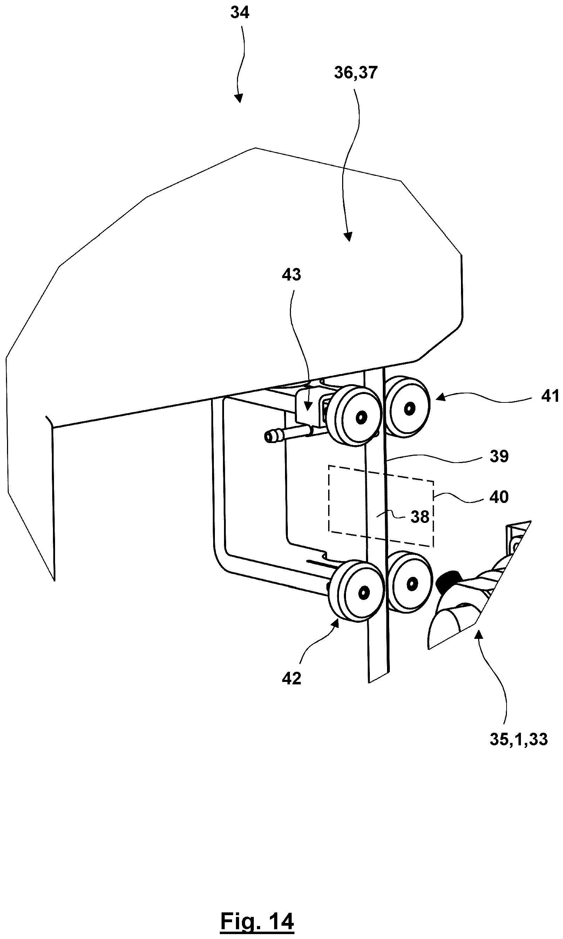

Wie insbesondere in Fig. 14 zu erkennen ist, ist die Trenneinrichtung 36 als Bandsäge mit einem umlaufenden endlosen Sägeband 38 ausgebildet. Das Sägeband 38 verfügt auf der der Positionier- und/oder Schwenkeinrichtung 35 zugewandten Schmalseite oder Kante über eine Verzahnung 39 mit geometrisch definierter Scheide und/oder über eine geometrisch undefinierte Schneide.

Die Haupterstreckungsebene des Sägebands 38 gibt eine Trennebene 40 vor. Bewegt die Positionier- und/oder Schwenkeinrichtung 35 die darin gehaltene Probe 33 in Richtung des Sägebands 38, erfolgt ein Durchtrennen der Probe 33 entlang der Trennebene 40.

Vor und hinter dem Bereich der Wechselwirkung des Sägebands 38 mit der Probe 33 befinden sich Führungseinrichtungen 41, 42. Für das dargestellte Ausführungsbeispiel sind die Führungseinrichtungen 41, 42 als beidseits an den Seitenflächen des Sägebands 38 abrollende Paare von Führungsrollen ausgebildet.

Des Weiteren ist in Fig. 14 zu erkennen, dass eine Spül- und/oder Schmiereinrichtung 43 vorhanden ist, welche das Sägeband 38 oder einen Sägekanal der Probe 33 mit einer Spül- oder Schmierflüssigkeit beaufschlagt.

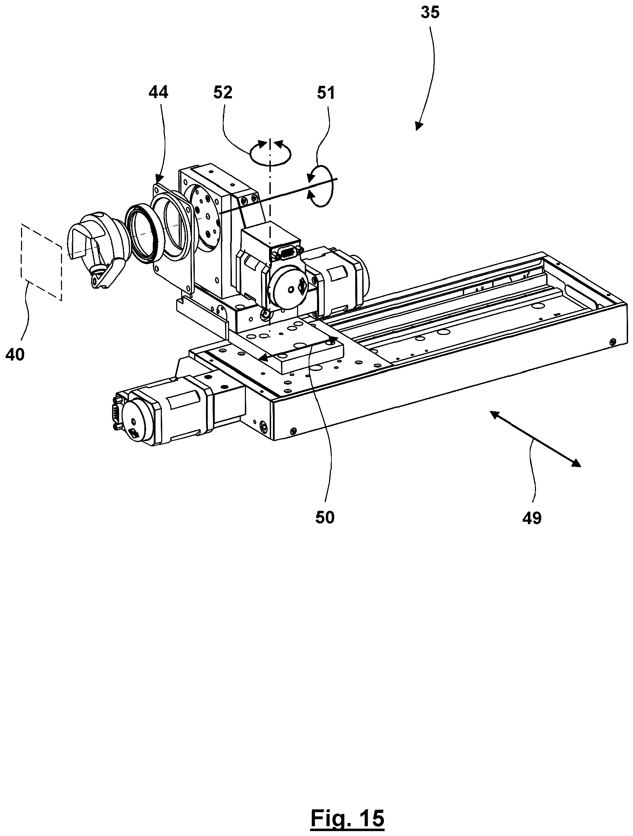

In Fig. 15 ist zu erkennen, wie das Probenhalteraufnahmeteil 19 an der Positionier- und/oder Schwenkeinrichtung 35 angebaut wird. Das Probenhalteraufnahmeteil 19 wird in eine Abdeckung 44 eingesetzt, die einen Schutz gegen Spritzwasser gewährleistet. Befestigt wird das Probenhalteraufnahmeteil 19 mit einer Schraube in der Durchgangsbohrung 47. Die Schraube stützt sich auf dem Absatz 46 ab. Um die relative Position und Orientierung des Probenhalteraufnahmeteils 19 gegenüber der Positionier- und/oder Schwenkeinrichtung 35 sicherzustellen, werden zusätzlich Passstifte und die Passbohrungen 45 verwendet.

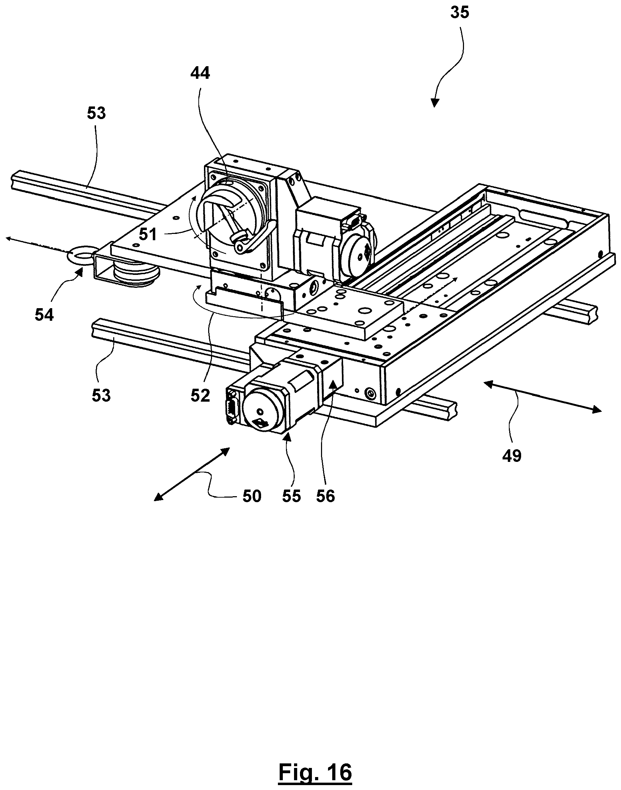

In Fig. 15 und 16 sind die unterschiedlichen Freiheitsgrade gekennzeichnet, entlang welcher mittels Aktuatoren oder Motoren, insbesondere Schrittmotoren, eine Relativbewegung des an der Positionier- und/oder Schwenkeinrichtung 35 gehaltenen Probenhalteraufnahmeteils 19 mit dem Probenhalter 1 und der Probe 33 gegenüber einem Gestell 48 und der Trenneinrichtung 36 herbeigeführt werden kann, um die Probe 33 so anzuordnen, auszurichten und zu bewegen, dass die Trennebene 40, im Bereich welcher die Probe 33 in die Probenteile aufgeteilt wird, der zuvor anhand des CT-Scans ermittelten Solltrennebene entspricht.

Ein Trenn-Freiheitsgrad 49 gibt die Bewegung der Probe 33 entlang der Trennebene 40 vor, sodass mit der Bewegung der Probe 33 entlang des Trenn-Freiheitsgrads 49 der Abstand der Probe 33 von dem Sägeband 38 verändert wird.

In einer horizontalen Ebene ist vertikal zu dem translatorischen Trenn-Freiheitsgrad 49 ein weiterer translatorischer Positionier-Freiheitsgrad 50 orientiert. Mittels einer Bewegung der Probe 33 entlang des Positionier-Freiheitsgrads 50 kann die relative Lage der Trennebene 40 gegenüber der Probe 33 verändert werden.

Eine Rotationsachse eines ersten Dreh-Freiheitsgrads 51 ist koaxial zu einer Längsachse der Probenhalteraufnahme des Probenhalteraufnahmeteils 19 orientiert.

Schließlich ist eine Rotationsachse eines zweiten Dreh-Freiheitsgrads 52 vertikal zu der durch den Trenn-Freiheitsgrad 49 und den Positionier-Freiheitsgrad 50 aufgespannten Ebene (hier der horizontalen Ebene) orientiert.

Die Bewegung des Trenn-Freiheitsgrads 49 wird vorzugsweise mittels Schienen 53 geführt und über einen Seilzug 54 herbeigeführt.

Die Bewegung entlang des Positionierfreiheitsgrads 50 wird vorzugsweise mittels eines Schrittmotors 55 und eines Spindeltriebs 56 herbeigeführt.

Schließlich erfolgt die Bewegung entlang der Dreh-Freiheitsgrade 51, 52 über geeignete Schwenkmotoren, ggf. mit der Zwischenschaltung einer Getriebeeinheit. Hierbei kann es sich ebenfalls um Schrittmotoren mit einer Getriebestufe, insbesondere einem Schneckentrieb, handeln.

Die Stützflächen 20, 21, 22 bilden eine Probenhalteraufnahme 57 der Positionier- und/oder Schwenkeinrichtung 35, hier des Probenhalteraufnahmeteils 19 der Positionier- und/oder Schwenkeinrichtung 35.

Das Fixieren der Probe 33 an dem Probenhalter 1 erfolgt über eine Befestigungs- und/oder Klemmeinrichtung 58, welche für das dargestellte Ausführungsbeispiel mit der Sicherungsschraube 7 (insbesondere Klemmschraube) gebildet ist.

Möglich ist auch, dass nach dem ersten Durchtrennen der Probe 33 in zwei Probenteile mittels eines weiteren erfindungsgemäß herbeiführten Sägeschnitts ein dünner Probenstreifen erzeugt wird, der dann mittels eines Trenn-Dünnschliffverfahrens auf die Zieldicke des Materialstreifens, die im Bereich von 30 µm bis 10 µm liegen kann, geschliffen wird.

Vorzugsweise erfolgt mittels der Spül- und/oder Schmiereinrichtung 43 eine Beaufschlagung von beiden Seiten des Sägebands 38. Die Positionier- und/oder Schwenkeinrichtung 35 kann mit einer Haube oder einem Spritzschutz gegen Späne oder Schleifpartikel der Trenneinrichtung und/oder das Spül- und/oder Schmierfluid geschützt sein.

Sofern lediglich ein kleines Materialvolumen vorhanden ist, kann die Probe 33 zusätzlich zu dem Materialvolumen auch ein Distanzstück, insbesondere einen Kunststoffblock aufweisen.

Wird ein Seilzug für die Anpresskraft der Probe an das Sägeband verwendet, passt sich die Schnittgeschwindigkeit automatisch an die Härte des zu sägenden Materials an. Wird beispielsweise ein weicher Kunststoff geschnitten, ist die Schnittgeschwindigkeit, also der Vorschub des Sägebands in Richtung der Probe, verhältnismäßig groß. Trifft dann das Sägeband auf die härtere Struktur, verringert sich infolge der höheren Schnittkräfte die Schnittgeschwindigkeit automatisch.

Bei Einsatz eines Seilzugs kann der Vorschub kraftgebunden sein, während für den möglichen Einsatz einer Spindel der Vorschub weggebunden sein kann. Ein kraftgebundener Vorschub stellt vorzugsweise eine konstante Schnittkraft sicher. Erhöhen sich die Spandicke, Spanmenge oder die Härte des Materials, kann die Schnittgeschwindigkeit sinken. Eine Reduktion der Schnittgeschwindigkeit ist für den Erhalt der Probe zuträglich - eine Erhöhung der Schnittkraft nicht.

Bei einem weggebundenen Vorschub kann die Schnittgeschwindigkeit konstant sein. Hier erhöht sich die Schnittkraft infolge der bereits beschriebenen Effekte.

Für den Positionier-Freiheitsgrad 50 findet vorzugsweise ein Lineartisch Einsatz.

Einsatz finden können Schrittmotoren, bei welchen ein Schritt eine Bewegung von 20 µm zur Folge haben kann. Hierbei können die Schrittmotoren über einen Hall-Sensor verfügen, über welchen eine Referenzierung des Schrittmotors möglich ist, wenn dieser seine Referenz- oder Nulllage verloren hat.

Durch Überlagerung des Histologieergebnisses und des CT-Scans kann beispielsweise die Güte des planbaren und automatisierten Schnittverfahrens quantitativ überprüft werden. Möglich ist auch, dass die beiden bildgebenden Verfahren positioniert und überlagert werden mit dem Bestreben, einen Mehrwert bei einer Charakterisierung von Krankheitsprozessen und final für eine Verbesserung der Diagnose zu erzielen.

Für eine Bewertung eines Krankheitsprozesses ist eine genaue räumliche Zuordnung des histologischen Ergebnisses und eine Analyse von benachbartem Gewebe essenziell. Da die Umgebung dreidimensional ist, lassen sich Aussagen nur bedingt durch zweidimensionale Histologieergebnisse treffen. Mittels CT-Scans können 3D-Scans mit zellulärer oder sogar subzellulärer Auflösung realisiert werden. Es besteht jedoch nicht die Möglichkeit, spezifische Zielstrukturen hervorzuheben, wie es mittels Histologie- und Immunhistochemie möglich ist. Erfindungsgemäß können die beiden Verfahren miteinander kombiniert werden, um eine exakte räumliche Korrelation zwischen Histologie und CT-Scan zu ermöglichen. Dies ermöglicht, bestimmte dreidimensionale Eigenschaften, die sich in den CT-Scans erkennen lassen (Metastasen, Volumina, Änderungen im Knochengewebe, Demineralisierungsmuster usw.), mit den spezifischen Einfärbungsprotokollen für Tumorantigene, Entzündungsmarkern usw. zu überlagern. Eine präzise Co-Lokalisation in den Datensätzen beider bildgebender Verfahren kann somit einen integralen Bestandteil für die Realisierung der gesetzten Ziele bilden. Obwohl durch die beiden bildgebenden Verfahren das betrachtete Hartgewebe sehr unterschiedlich in beispielsweise der Durchlässigkeit und Farbraum abgebildet werden kann, kann sich durch die starre Natur der Probe sowie die Minimierung der Deformation im Workflow bei Einsatz eines Lasermikrotoms eine deutliche Verbesserung in der Qualität der kombinierten CT-Darstellung und der histologischen Darstellung ergeben.

### BEZUGSZEICHENLISTE

- 1: Probenhalter
- 2: Probenaufnahme
- 3: Innenfläche
- 4: Boden
- 5: Erweiterung, Ausbeulung
- 6: Probenaufnahmeachse
- 7: Sicherungsschraube
- 8: Durchgangsgewindebohrung
- 9: Grundkörper
- 10: Nut
- 11: Längsachse
- 12: Winkel
- 13: Anpressfläche
- 14: Referenzfläche
- 15: Referenzfläche
- 16: Referenzfläche
- 17: Unterseite
- 18: Stufe
- 19: Probenhalteraufnahmeteil
- 20: Stützfläche
- 21: Stützfläche
- 22: Stützfläche
- 23: Stirnfläche
- 24: Grundkörper
- 25: Fortsatz
- 26: Nut
- 27: Anpresseinrichtung
- 28: Anpressstange
- 29: Exzenterhebel
- 30: Anpressplatte
- 31: Gelenk
- 32: Kopplungsabschnitt
- 33: Probe
- 34: Histologie-Probenaufbereitungseinrichtung
- 35: Positionier- und/oder Schwenkeinrichtung
- 36: Trenneinrichtung
- 37: Bandsäge
- 38: Sägeband
- 39: Verzahnung
- 40: Trennebene
- 41: Führungseinrichtung
- 42: Führungseinrichtung
- 43: Spül- und/oder Schmiereinrichtung
- 44: Abdeckung
- 45: Passbohrung
- 46: Absatz
- 47: Durchgangsbohrung
- 48: Gestell
- 49: Trenn-Freiheitsgrad
- 50: Positionier-Freiheitsgrad
- 51: erster Dreh-Freiheitsgrad
- 52: zweiter Dreh-Freiheitsgrad
- 53: Schiene
- 54: Seilzug
- 55: Schrittmotor
- 56: Spindeltrieb
- 57: Probenhalteraufnahme
- 58: Befestigungs- und/oder Klemmeinrichtung

## Patentansprüche

1. Verfahren zur Aufbereitung einer histologischen Probe (33) mit folgenden Verfahrensschritten:
a) Fixierung der Probe (33) an einem Probenhalter (1), der drei ebene Referenzflächen (14, 15, 16) aufweist, die Referenzflächennormale oder Schnittachsen aufweisen, die ein räumliches Referenzkoordinatensystem aufspannen,
b) Erzeugung eines räumlichen CT-Scans des Probenhalters (1) und der an dem Probenhalter (1) fixierten Probe (33),
c) Identifizierung der drei Referenzebenen (14, 15, 16) des Probenhalters mit der daran gehaltenen Probe (33) in dem CT-Scan,
d) Identifizierung eines Untersuchungsbereichs in dem CT-Scan,
e) Identifizierung einer Solltrennkoordinate und/oder Solltrennorientierung einer Solltrennebene entlang des Untersuchungsbereichs in dem CT-Scan, wobei die Solltrennkoordinate und/oder Solltrennorientierung auf das durch die Referenzflächen (14, 15, 16) vorgegebene räumliche Referenzkoordinatensystem bezogen ist,
f) Fixierung des Probenhalters (1) mit der daran fixierten Probe (33) an einer Positionier- und/oder Schwenkeinrichtung (35), wobei die drei Referenzflächen (14, 15, 16) des Probenhalters (1) an Stützflächen (20, 21, 22) einer Probenhalteraufnahme (57) der Positionier- und/oder Schwenkeinrichtung (35) anliegen,
g) Betätigung der Positionier- und/oder Schwenkeinrichtung (35) derart, dass eine Trennebene (40) einer Trenneinrichtung (36) der Solltrennebene entspricht, wobei die Betätigung in Abhängigkeit der identifizierten Solltrennkoordinate und/oder Solltrennorientierung erfolgt und
h) Durchtrennen der Probe (33) in Probenteile durch Relativbewegung der Trenneinrichtung (36) und der an der Positionier- und/oder Schwenkeinrichtung (35) über den Probenhalter (1) gehaltenen Probe (33) in Richtung der Trennebene (40).

2. Verfahren nach Anspruch 1, **wobei**
a) die Positionier- und/oder Schwenkeinrichtung (35) oder der Probenhalter (1) eine Anpresseinrichtung (27) aufweist und
b) die Referenzflächen (14, 15, 16) des Probenhalters (1) und die Stützflächen (20, 21, 22) der Probenhalteraufnahme (57) der Positionier- und/oder Schwenkeinrichtung (35) durch die Anpresseinrichtung (27) mit einer Anpresskraft aneinandergepresst werden, die Anpresskraftkomponenten aufweist, die jeweils vertikal zu einer Referenzfläche und/oder einer Stützfläche (20; 21; 22) der Probenhalteraufnahme (57) der Positionier- und/oder Schwenkeinrichtung (35) orientiert sind,
wobei vorzugsweise nach dem Durchtrennen der Probe (33) ein Probenteil auf einen Objektträger aufgebracht wird und ein Materialstreifen mittels einer Mikrotomie aus dem Probenteil erzeugt wird.

3. Verfahren nach Anspruch 1 oder 2, **wobei** ein Probenteil oder der Materialstreifen histologisch untersucht wird und das Histologieergebnis mit dem CT-Scan verknüpft wird, wobei vorzugsweise
a) die Verknüpfung des Histologieergebnisses mit dem CT-Scan beinhaltet, dass dem Histologieergebnis eine Histologieergebnis-Koordinate und/oder Histologieergebnis-Orientierung in dem CT-Scan zugeordnet wird und/oder
b) die Verknüpfung des Histologieergebnisses mit dem CT-Scan beinhaltet, dass eine Verifikation erfolgt, ob die tatsächliche Trennebene der Probe (33) der auf Grundlage des CT-Scans ermittelten Solltrennebene entspricht und/oder
c) die Verknüpfung des Histologieergebnisses mit dem CT-Scan beinhaltet, dass eine grafische Ausgabe erzeugt wird, bei der das Histologieergebnis in den CT-Scan eingebettet ist und/oder
d) die Verknüpfung des Histologieergebnisses mit dem CT-Scan beinhaltet, dass die grafische Ausgabe oder der CT-Scan auf Grundlage eines Analyseergebnisses des Histologieergebnisses modifiziert wird.

4. Verfahren nach einem der vorhergehenden Ansprüche, **wobei** ein Probenteil nochmals durchtrennt wird oder nochmals ein Materialstreifen entnommen wird.

5. Verfahren nach einem der vorhergehenden Ansprüche, **wobei** eine Identifizierung der Referenzflächen (14, 15, 16) unter Verwendung
a) eines Hough-Linien-Algorithmus und/oder
b) eines Raytracing-Algorithmus
erfolgt.

6. Histologie-Probenaufbereitungseinrichtung (34) mit
a) einem Probenhalter (1), der drei ebene Referenzflächen (14, 15, 16) aufweist, die Referenzflächennormale oder Schnittachsen aufweisen, die ein räumliches Referenzkoordinatensystem aufspannen,
b) einer Positionier- und/oder Schwenkeinrichtung (35),
c) einer Trenneinrichtung (36),
d) einem CT-Scanner und
e) einer Steuereinrichtung,
wobei die Steuereinrichtung mit Steuerlogik ausgestattet ist, die geeignet gestaltet und konfiguriert ist, um mit der Histologie-Probenaufbereitungseinrichtung (34) ein Verfahren nach einem der vorhergehenden Ansprüche auszuführen.

7. Histologie-Probenaufbereitungseinrichtung (34) nach Anspruch 6, wobei der Probenhalter (1) eine Befestigung- und/oder Klemmeinrichtung (58) aufweist, mittels welcher eine Probe (33) in einer Probenaufnahme (2) des Probenhalters (1) fixiert werden kann.

8. Histologie-Probenaufbereitungseinrichtung (34) nach Anspruch 6 oder 7, **wobei** eine Probenhalteraufnahme (57) der Positionier- und/oder Schwenkeinrichtung (35) Stützflächen (20, 21, 22) aufweist, welche entsprechend den Referenzflächen (14, 15, 16) des Probehalters (1) orientiert sind.

9. Histologie-Probenaufbereitungseinrichtung (34) nach Anspruch 8, **wobei** die Positionier- und/oder Schwenkeinrichtung (35) oder der Probenhalter (1) eine Anpresseinrichtung (27) aufweist, welche die Referenzflächen (14, 15, 16) des Probenhalters (1) mit einer Anpresskraft an die Stützflächen (20, 21, 22) der Probenhalteraufnahme (57) der Positionier- und/oder Schwenkeinrichtung (35) presst, wobei die Anpresskraft Anpresskraftkomponenten aufweist, die jeweils vertikal zu einer Referenzfläche (14, 15, 16) und/oder einer Stützfläche (20, 21, 22) der Probenhalteraufnahme (57) der Positionier- und/oder Schwenkeinrichtung (35) orientiert sind.

10. Histologie-Probenaufbereitungseinrichtung (34) nach Anspruch 9, **wobei die** Anpresseinrichtung (27) eine Spannschraube, Anpressstange (28) oder Zugstange aufweist, die sich durch eine Ausnehmung oder eine Nut (10) des Probehalters (1) hindurch erstreckt.

11. Histologie-Probenaufbereitungseinrichtung (34) nach einem der Ansprüche 6 bis 10, **wobei** die Trenneinrichtung (36) eine Bandsäge (37) mit einem Sägeband (38) ist, wobei vorzugsweise die Bandsäge (37) ein Sägeband (38) mit geometrisch unbestimmten Schneiden aufweist.

12. Histologie-Probenaufbereitungseinrichtung (34) nach Anspruch 11, **wobei** die Bandsäge (37) mindestens eine Führungseinrichtung (41, 42) aufweist, welche in Bewegungsrichtung des Sägebandes (38) vor und/oder hinter der zu durchtrennenden Probe (33) angeordnet sind und das Sägeband (38) führen.

13. Histologie-Probenaufbereitungseinrichtung (34) nach Anspruch 11 oder 12, **wobei** eine Spül- und/oder Schmiereinrichtung (43) vorhanden ist, welche ein Spül- und/oder Schmierfluid auf das Sägeband (38) und/oder die Probe (33) im Bereich eines Sägekanals der Probe (33) aufbringt.

14. Histologie-Probenaufbereitungseinrichtung (34) nach einem der Ansprüche 6 bis 13, **wobei** die Positionier- und/oder Schwenkeinrichtung (35)
a) einen translatorischen Trenn-Freiheitsgrad (49) aufweist,
b) einen translatorischen Positionier-Freiheitsgrad (50) aufweist,
c) einen ersten Dreh-Freiheitsgrad (51) aufweist und
d) einen zweiten Dreh-Freiheitsgrad (52) aufweist.
